(19) Europäisches Patentamt
European Patent Office
Office européen des brevets

(11) **EP 4 321 960 A1**

(12) **EUROPÄISCHE PATENTANMELDUNG**

(43) Veröffentlichungstag:
**14.02.2024  Patentblatt 2024/07**

(21) Anmeldenummer: **22189170.8**

(22) Anmeldetag: **08.08.2022**

(51) Internationale Patentklassifikation (IPC):
***G05D 16/10*** *(2006.01)*

(52) Gemeinsame Patentklassifikation (CPC):
**F17C 7/00; G05D 16/0647; G05D 16/103;**
F17C 2201/0109; F17C 2201/0119;
F17C 2205/0329; F17C 2205/0338;
F17C 2205/0382; F17C 2221/035;
F17C 2223/0153; F17C 2223/033;
F17C 2225/0123; F17C 2225/033;
F17C 2250/0626; F17C 2270/0168

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **GOK Regler- und
Armaturen-Gesellschaft mbH & Co.KG
97340 Marktbreit (DE)**

(72) Erfinder: **SMEENK, Alfons
97297 Waldbüttelbrunn (DE)**

(74) Vertreter: **Vossius & Partner
Patentanwälte Rechtsanwälte mbB
Siebertstraße 3
81675 München (DE)**

(54) **VORRICHTUNG ZUR VERHINDERUNG EINER RÜCKVERFLÜSSIGUNG EINES FLÜSSIGGASES IN EINEM FLÜSSIGGASLEITUNGSSYSTEM, FLÜSSIGGASLEITUNGSSYSTEM UND FAHRZEUG**

(57)      Die Erfindung betrifft eine Vorrichtung (100) zur Verhinderung einer Rückverflüssigung eines Flüssiggases in einem Flüssiggasleitungssystem (300), aufweisend einen Körper (102) mit einem Einlass (104), einem Auslass (106), einem ersten Körperabschnitt (520), einem zweiten Körperabschnitt (522) und einem Körperinnenraum (108); ein im Körperinnenraum (108) angeordnetes doppelseitig wirkendes bewegliches Verschlusselement (110) mit einem ersten Verschlusselementabschnitt (142) und einem zweiten Verschlusselementabschnitt (144); wobei das Verschlusselement (110) eine erste Dichtung (122, 502) zwischen dem ersten Verschlusselementabschnitt (142) und dem ersten Körperabschnitt (520) und/oder eine zweite Dichtung (120, 500) zwischen dem zweiten Verschlusselementabschnitt (144) und dem zweiten Körperabschnitt (522) aufweist; wobei das Verschlusselement (110) im Körperinnenraum (108) zwischen einer ersten Stellung und einer zweiten Stellung verschiebbar ist; wobei das Verschlusselement (110) in seiner ersten Stellung einen Durchfluss des Flüssiggases vom Einlass (104) zum Auslass (106) verhindert; wobei die Vorrichtung (100) zumindest in einer dritten Stellung des Verschlusselements (110) zwischen der ersten Stellung und der zweiten Stellung einen Durchfluss des Flüssiggases vom Einlass (104) zum Auslass (106) zulässt; wobei das Verschlusselement (110) eine dem Einlass (104) zugewandte erste Verschlusselementseite (112) mit einer ersten wirksamen Verschlusselementfläche F1 (114) und eine dem Auslass (106) zugewandte zweite Verschlusselementseite (116) mit einer zweiten wirksamen Verschlusselementfläche F2 (118) aufweist; wobei die zweite wirksame Verschlusselementfläche F2 (118) größer ist als die erste wirksame Verschlusselementfläche F1 (114) wobei die erste Dichtung (122, 502) eine erste Membran (502) aufweist und/oder die zweite Dichtung (120, 500) eine zweite Membran (500) aufweist.

Fig. 5

**Beschreibung**

Die vorliegende Erfindung betrifft Flüssiggasleitungssysteme, vorzugsweise von Fahrzeugen, und insbesondere eine Vorrichtung zur Verhinderung einer Rückverflüssigung eines Flüssiggases in einem Flüssiggasleitungssystem.

Flüssiggas hat die Eigenschaft, sich bei relativ geringem Druck bei Normaltemperatur in den flüssigen Aggregatzustand zu begeben. Beispielsweise nimmt Propan bei 20 °C den flüssigen Aggregatzustand bei ca. 8,4 bar ein und n-Butan bei ca. 2,1 bar. Dies kann unter anderem für die Logistik positive Auswirkungen haben, da Flüssiggas in flüssiger Form in Gasflaschen, Kartuschen oder Tanks aufbewahrt und transportiert werden kann, so dass für die Aufbewahrung und den Transport der Platz- und Energiebedarf geringer als bei einem gasförmigen Energieträger ist.

Die Erfinder der vorliegenden Erfindung kamen zur Erkenntnis, dass die Eigenschaft von Flüssiggas, sich bei relativ geringem Druck bei Normaltemperatur in den flüssigen Aggregatszustand zu begeben, insoweit Probleme bereiten kann, dass das Flüssiggas im Hochdruckbereich des Flüssiggasleitungssystems-z.B. in einem Hochdruckschlauch zwischen der Gasflasche, der Kartusche oder dem Tank - und dem Gasdruckregler, zumindest teilweise wieder den flüssigen Aggregatszustand einnehmen kann. Mit anderen Worten kann es zu einer Rückverflüssigung des Flüssiggases im Flüssiggasleitungssystem kommen. Diese Rückverflüssigung des Flüssiggases im Flüssiggasleitungssystem kann wiederum Schäden und/oder Störungen an der Schlauchleitung und/oder den nachfolgenden Armaturen, z.B. einem Gasdruckregler, des Flüssiggasleitungssystems verursachen.

Aufgabe der Erfindung ist es, die Zuverlässigkeit von Flüssiggasleitungssystemen und/oder deren Komponenten insbesondere in Fahrzeugen zu erhöhen und/oder deren Wartungsanfälligkeit zu verringern. Insbesondere kann eine Aufgabe darin gesehen werden, Schäden im Gasleitungssystem, insbesondere an Schlauchleitung und Armaturen des Gasleitungssystems zu vermeiden. Eine Aufgabe kann auch darin gesehen werden, die Rückverflüssigung von Flüssiggas in einem Flüssiggasleitungssystem zu verhindern. Eine weitere Aufgabe kann darin gesehen werden, Fluidleitungssysteme gegen Schlauchbruch und/oder Schlauchabriss zu sichern.

Diese Aufgaben werden zumindest teilweise durch die Gegenstände des unabhängigen und der nebengeordneten Patentansprüche gelöst. Weitere Ausführungsformen der Erfindung sind in den abhängigen Ansprüchen, der nachfolgenden Beschreibung und den Figuren offenbart.

Unter dem Betriff "Flüssiggas" sind im Rahmen dieser Offenbarung im Allgemeinen Gase aus kurzkettigen Kohlenwasserstoffen wie beispielsweise Propan und Butan sowie deren Gemische zu verstehen, die bei Raumtemperatur (20° C) und geringer Kompression (z. B. < 10 bar) flüssig bleiben. Flüssiggas kann neben Propan und Butan unter anderem auch Propen, Buten, Isobutan und/oder Isobuten sein oder enthalten. Im Rahmen der vorliegenden Offenbarung bezieht sich der Begriff "Gas" durchgehend auf Flüssiggas. Das Flüssiggas ist insbesondere ein brennbares Gas. Das Flüssiggas kann zumindest entlang eines Teils des Leitungssystems im gasförmigen Zustand vorliegen. Soweit nachfolgend der Begriff "Flüssiggas" verwendet wird, schließt dies daher den Fall ein, dass das Flüssiggas in dem gasförmigen Zustand vorliegt und/oder in diesen übergegangen ist (z. B. indem es ausgehend von einer Flüssiggas-Gasflasche durch einen Druckminderer geleitet wurde). Der Betriff "Flüssiggas" erfordert nicht, dass das Flüssiggas bei Standardbedingungen (20° C Raumtemperatur und Druck von 1 bar) flüssig ist. Flüssiggas kann bei diesen Standardbedingungen auch gasförmig sein, was insbesondere bei Propan und Butan der Fall ist.

Ebenso bezeichnet der Begriff "Druck" im Rahmen dieser Offenbarung, sofern nicht explizit anders angegeben, den Gasdruck des Flüssiggases.

Eine Ausführungsform betrifft eine Vorrichtung zur Verhinderung einer Rückverflüssigung eines Flüssiggases in einem Flüssiggasleitungssystem, aufweisend einen Körper mit einem Einlass, einem Auslass und einem Körperinnenraum und ein im Körperinnenraum angeordnetes doppelseitig wirkendes bewegliches Verschlusselement. Das Verschlusselement ist dabei im Körperinnenraum zwischen einer ersten Stellung und einer zweiten Stellung verschiebbar, wobei das Verschlusselement in seiner ersten Stellung einen Durchfluss des Flüssiggases vom Einlass zum Auslass verhindert. In einer dritten Stellung des Verschlusselements zwischen der ersten Stellung und der zweiten Stellung lässt die Vorrichtung einen Durchfluss des Flüssiggases vom Einlass zum Auslass zu. Das Verschlusselement weist eine dem Einlass zugewandte erste Verschlusselementseite mit einer ersten wirksamen Verschlusselementfläche F1 und eine dem Auslass zugewandte zweite Verschlusselementseite mit einer zweiten wirksamen Verschlusselementfläche F2 auf, wobei die zweite wirksame Verschlusselementfläche F2 größer ist als die erste wirksame Verschlusselementfläche F1.

Vorzugsweise weist der Körper einen ersten Körperabschnitt und einem zweiten Körperabschnitt auf. Der erste Körperabschnitt kann den hierin beschriebenen ersten Innenraumabschnitt bilden, und der zweite Körperabschnitt kann den zweiten Innenraumabschnitt bilden. Vorzugsweise weist das Verschlusselement einen ersten Verschlusselementabschnitt und einem zweiten Verschlusselementabschnitt auf. Vorzugsweise weist das Verschlusselement eine erste Dichtung zwischen dem ersten Verschlusselementabschnitt und dem ersten Körperabschnitt und/oder eine zweite Dichtung zwischen dem zweiten Verschlusselementabschnitt und dem zweiten Körperabschnitt auf. Vorzugsweise weist die erste Dichtung eine erste Membran auf und/oder die zweite Dichtung weist eine zweite Membran auf.

Aufgrund des Verhältnisses der ersten wirksamen Verschlusselementfläche F1 und der zweiten wirksamen Verschlusselementfläche F2 bewegt sich das Verschlusselement in die erste Stellung, in der die Vorrichtung geschlossen ist, wenn der Druck des Flüssiggases p1 am Einlass, der Druck des Flüssiggases am Auslass p2, die erste wirksame Verschlusselementfläche F1 und die zweite wirksame Verschlusselementfläche F2 folgende Ungleichung erfüllen: $p2 > p1 \cdot F1/F2$. Mit anderen Worten, wenn der Druck p2 auf der Auslassseite den Grenzwert $p1 \cdot F1/F2$ überschreitet, bewegt sich das Verschlusselement in die erste Stellung, d.h. in die Schließstellung, und die Vorrichtung verhindert, dass Flüssiggas vom Einlass zum Auslass der Vorrichtung strömt. Da die zweite wirksame Verschlusselementfläche F2 größer als die erste wirksame Verschlusselementfläche F1 ist, ist der Grenzwert $p1 \cdot F1/F2$ kleiner als p1. Das bedeutet, dass die Vorrichtung einen Durchfluss des Flüssiggases vom Einlass zum Auslass verhindert, wenn der Druck am Auslass einen Grenzwert überschreitet, der niedriger ist als der Druck am Einlass. Auf diese Weise kann verhindert werden, dass der Druck des Flüssiggases am Auslass den Druck des Flüssiggases erreicht, der am Einlass, d.h. vorzugsweise auch in der Flüssiggasquelle, vorherrscht. Somit verhindert die Vorrichtung eine Rückverflüssigung des Flüssiggases am Auslass und somit im am Auslass angeschlossenen Teil des Flüssiggasleitungssystems. Hierbei ist zu beachten, dass es sich um eine idealisierte Betrachtung handelt. In Realität können Abweichungen zu dem oben genannten Grenzwert z.B. aufgrund der hierin offenbarten Krafteinrichtung und/oder von inneren Reibungsverlusten auftreten, die unter anderem von einer Dichtung des Verschlusselements zwischen dem Verschlusselement und dem Körper herrühren können. Die grundsätzliche Wirkungsweise und Aussage bleiben hiervon jedoch unberührt.

Wenn der Druck des Flüssiggases am Auslass wieder unter diesen Druckgrenzwert fällt, bewegt sich das Verschlusselement wieder von der ersten Stellung weg. Dieser Vorgang kann dynamisch sein, so dass, sobald der Druck am Auslass abgesunken ist, wieder eine kleine Flüssiggasmenge eingelassen wird bis der Druckgrenzwert des Flüssiggases am Auslass erreicht ist.

Unter einem doppelseitig wirkenden Verschlusselement ist ein Verschlusselement zu verstehen, das zwei gegenüberliegenden Verschlusselementflächen aufweist, die jeweils mit dem Druck des Flüssiggases beaufschlagt werden können, so dass das Verschlusselement axial in beide Richtungen aktiv durch den Druck des Flüssiggases bewegt wird.

Unter der ersten Verschlusselementseite ist dabei die Seite des Verschlusselements zu verstehen, die dem Druck des Flüssiggases am Einlass ausgesetzt ist. Entsprechend ist unter der zweiten Verschlusselementseite die Seite des Verschlusselements zu verstehen, die dem Druck des Flüssiggases am Auslass ausgesetzt ist. Unter einer wirksamen Verschlusselementfläche ist eine Projektion der jeweiligen Verschlusselementseite in Axialrichtung des Verschlusselements, d.h. entlang der Längsachse des Verschlusselements, auf eine gedachte, senkrecht zur Axialrichtung ausgerichtete Projektionsebene zu verstehen.

Das heißt, die erste wirksame Verschlusselementfläche bezeichnet eine Projektion der ersten Verschlusselementseite in Axialrichtung des Verschlusselements auf eine gedachte, senkrecht zur Axialrichtung ausgerichtete Projektionsebene, also diejenige Fläche der ersten Verschlusselementseite, die aufgrund des am Einlass wirkenden Drucks des Flüssiggases auf die erste Verschlusselementseite auf das Verschlusselement eine in Axialrichtung zum Auslass gerichtete Kraft bewirkt. Ebenso bezeichnet die zweite wirksame Verschlusselementfläche eine Projektion der zweiten Verschlusselementseite in Axialrichtung des Verschlusselements auf eine gedachte, senkrecht zur Axialrichtung ausgerichtete Projektionsebene, also diejenige Fläche der zweiten Verschlusselementseite, die aufgrund des am Auslass wirkenden Drucks des Flüssiggases auf die zweite Verschlusselementseite auf das Verschlusselement eine in Axialrichtung zum Einlass gerichtete Kraft bewirkt.

Das Verschlusselement kann an der ersten Verschlusselementseite eine erste Membran und/oder an der zweiten Verschlusselementseite eine zweite Membran aufweisen. Dadurch kann der Druck des Flüssiggases über die erste bzw. zweite Membran auf das Verschlusselement einwirken. In diesem Fall wird die erste bzw. zweite wirksame Verschlusselementfläche durch die erste bzw. zweite Membran gebildet. Das heißt, dass die erste bzw. zweite Verschlusselementfläche eine Projektion der ersten bzw. zweiten Membran in Axialrichtung auf eine gedachte, senkrecht zur Axialrichtung ausgerichtete Projektionsebene bezeichnet, also diejenige Fläche der ersten bzw. zweitem Membran, die aufgrund des am Einlass bzw. Auslass wirkenden Drucks des Flüssiggases auf das Verschlusselement eine in Axialrichtung zum Auslass bzw. Einlass gerichtete Kraft bewirkt.

Das Verschlusselement kann dabei derart im Körperinnenraum gelagert sein, dass es nur entlang seiner Axialrichtung bewegbar ist. Die erste und die zweite Stellung des Verschlusselements bezeichnen die Endpositionen des Verschlusselements zwischen denen das Verschlusselement bewegbar ist. Die dritte Stellung bezeichnet eine Stellung des Verschlusselements zwischen diesen beiden Endpositionen. Vorzugsweise kann das Verschlusselement jedwede Position zwischen der ersten Stellung und der zweiten Stellung einnehmen. Bei der dritten Stellung muss es sich daher nicht um eine feste Position des Verschlusselements handeln. Das heißt, im Betrieb kann die Position des Verschlusselements zwischen der ersten Stellung und der zweiten Stellung je nach Druck am Einlass und Auslass und abhängig von der Temperatur variieren. Unter der dritten Stellung können daher alle möglichen Betriebspositionen des Verschlusselements zwischen der ersten Stellung und der zweiten Stellung (d.h. ausgenommen von der ersten Stellung und der zweiten Stellung) verstanden werden.

Die erste Dichtung kann vorzugsweise am ersten Verschlusselementabschnitt vorgesehen sein und/oder die zweite Dichtung kann vorzugsweise am zweiten Verschlusselementabschnitt vorgesehen sein.

Auf diese Weise kann sichergestellt werden, dass auf die erste Verschlusselementseite nur der Druck des Flüssiggases am Einlass der Vorrichtung und auf die zweiten Verschlusselementseite nur der Druck des Flüssiggases am Auslass der Vorrichtung wirken, insbesondere wenn eine erste Dichtung am ersten Verschlusselementabschnitt und eine zweite Dichtung am zweiten Verschlusselementabschnitt vorgesehen sind.

Vorzugsweise weisen/weist die erste Dichtung eine erste Membran und/oder die zweite Dichtung eine zweite Membran auf. Weiter bevorzugt werden/wird die erste Dichtung durch die erste Membran und/oder die zweite Dichtung durch die zweite Membran gebildet. Sofern nur eine der beiden Dichtungen eine Membran aufweist, kann die andere Dichtung einen Dichtungsring und/oder eine Lippendichtung aufweisen.

Das Verschlusselement kann zusätzlich zur ersten und/oder zweiten Membran einen Übertragungskörper aufweisen, der mit der ersten und/oder zweiten Membran verbunden ist und/oder daran befestigt ist.

Unter einer Membran ist vorzugsweise eine dünne, flächige und flexible Struktur zu verstehen. Vorzugsweise weist die Membran eine Öffnung auf, die mit einer Bohrung des Verschlusselements und/oder Übertragungskörpers verbunden und/oder daran befestigt ist. Vorzugsweise ist ein äußerer Rand der Membran mit dem Körper der Vorrichtung verbunden und/oder daran befestigt.

Indem mindestens eine der beiden Dichtungen eine Membran aufweist, kann eine effektive Dichtung bereitgestellt werden, ohne die Reibung zwischen dem Verschlusselement und dem Körper der Vorrichtung wesentlich zu erhöhen. Dadurch kann beispielsweise auf die hierin beschriebene Krafteinrichtung verzichtet werden (es kann jedoch auch eine solche Krafteinrichtung vorgesehen sein).

Vorzugsweise weisen/weist die erste Membran und/oder die zweite Membran jeweils ein Elastomer, Acrylnitril-Butadien-Kautschuk (NBR) und/oder Fluorkautschuk (FKM, FPM) auf. Vorzugsweise ist die Membran aus einem dieser genannten Materialien gefertigt und/oder besteht aus einem dieser Materialien.

Vorzugsweise weisen/weist die erste Membran und/oder die zweite Membran eine Härte zwischen 55 und 85 IRHD-M aufweist.

Die Härte wird gemäß mittels einer IRHD-M-Messung nach den Normen ISO 48, DIN ISO 48, ISO 7619-1, DIN ISO 7619-1, DIN EN ISO 868, ASTM D1415 und ASTM 2240 bestimmt.

Vorzugsweise haben/hat die erste und/oder zweite Membran eine Dicke zwischen 0,2 und 0,5 mm.

Vorzugsweise ist die Vorrichtung geeignet und/oder ausgebildet, um mit Flüssiggas zu operieren, das am Einlass mit einem Druck im Bereich zwischen 1 bar und 16 bar, vorzugsweise zwischen 3 bar und 6 bar, bereitgestellt wird. Mit anderen Worten kann die Vorrichtung dazu geeignet und/oder eingerichtet sein, um mit einem Flüssiggas wie Propan, und Butan, Propen, Buten, Isobutan und/oder Isobuten sowie deren Gemische zu operieren.

Vorzugsweise unterscheidet sich die Größe der ersten wirksamen Verschlusselementfläche F1 in der ersten Stellung des Verschlusselements um 20% oder weniger, vorzugsweise 10% oder weniger, von der Größe der ersten wirksamen Verschlusselementfläche F1 in der zweiten und/oder dritten Stellung des Verschlusselements; wobei die Größe der ersten wirksamen Verschlusselementfläche F1 in der ersten Stellung des Verschlusselements und der dritten Stellung des Verschlusselements weiter bevorzugt gleich ist.

Wenn die erste wirksame Verschlusselementfläche in der ersten Stellung des Verschlusselements mit $F1_1$, in der zweiten Stellung des Verschlusselements mit $F1_2$, und in der dritten Stellung des Verschlusselements mit $F1_3$ bezeichnet wird, kann dies wie folgt ausgedrückt werden:

$|F1_1 - F1_2| \leq K\ F1_2$ und/oder $|F1_1 - F1_3| \leq K\ F1_3$, wobei K= 0,2; 0,1; 0.

Auf diese Weise kann sichergestellt werden, dass sich die durch den auf die erste wirksame Verschlusselementfläche ausgeübten Gasdruck bewirkte Kraft auf das Verschlusselement in der ersten Stellung des Verschlusselements um 20% oder weniger, vorzugsweise 10% oder weniger, von der durch den auf die erste wirksame Verschlusselementfläche ausgeübten Gasdruck bewirkte Kraft auf das Verschlusselement in der zweiten und/oder dritten Stellung des Verschlusselements unterscheidet. Weiter bevorzugt unterscheidet sich diese Kraft in der ersten Stellung des Verschlusselements und der zweiten und/oder dritten Stellung des Verschlusselements nicht. Dadurch ist Vorrichtung auch dann funktionsfähig, wenn sich das Verschlusselement in der ersten Stellung befindet.

Vorzugsweise unterscheidet sich die Größe der zweiten wirksamen Verschlusselementfläche F2 in der zweiten Stellung des Verschlusselements um 20% oder weniger, vorzugsweise 10% oder weniger, von der Größe der zweiten wirksamen Verschlusselementfläche F2 in der ersten und/oder dritten Stellung des Verschlusselements unterscheidet; wobei die Größe der zweiten wirksamen Verschlusselementfläche F2 in der zweiten Stellung des Verschlusselements und der dritten Stellung des Verschlusselements weiter bevorzugt gleich ist.

Wenn die zweite wirksame Verschlusselementfläche in der ersten Stellung des Verschlusselements mit $F2_1$, in der zweiten Stellung des Verschlusselements mit $F2_2$, und in der dritten Stellung des Verschlusselements mit $F2_3$ bezeichnet wird, kann dies wie folgt ausgedrückt werden:

$|F2_2 - F2_1| \leq K\ F2_1$ und/oder $|F2_2 - F2_3| \leq K\ F2_3$, wobei

K= 0,2; 0,1; 0.

Auf diese Weise kann sichergestellt werden, dass sich die durch den auf die zweite wirksame Verschlusselementfläche ausgeübten Gasdruck bewirkte Kraft auf das Verschlusselement in der zweiten Stellung des Verschlusselements um 20% oder weniger, vorzugsweise 10% oder weniger, von der durch den auf die zweite wirksame Verschlusselementfläche ausgeübten Gasdruck bewirkte Kraft auf das Verschlusselement in der ersten und/oder dritten Stellung des Verschlusselements unterscheidet. Weiter bevorzugt unterscheidet sich diese Kraft in der zweiten Stellung des Verschlusselements und der ersten und/oder dritten Stellung des Verschlusselements nicht. Dadurch ist Vorrichtung auch dann funktionsfähig, wenn sich das Verschlusselement in der zweiten Stellung befindet.

Unter der Größe der ersten bzw. zweiten wirksamen Verschlusselementfläche F1 bzw. F2 ist der Flächeninhalt der ersten bzw. zweiten wirksamen Verschlusselementfläche F1 bzw. F2 zu verstehen.

Vorzugsweise ist die Vorrichtung derart konfiguriert, besonders bevorzugt sind die erste wirksame Verschlusselementfläche und die zweite wirksame Verschlusselementfläche derart aufeinander abgestimmt, dass das Verschlusselement die erste Stellung einnimmt, wenn der Druck des Flüssiggases am Auslass größer ist als der dritte Teil, bevorzugt der fünfte Teil, besonders bevorzugt der achte Teil, weiter besonders bevorzugt der zehnte Teil des Drucks des Flüssiggases am Einlass.

Mit anderen Worten soll das Verschlusselement die erste Stellung einnehmen, wenn der Druck p1 des Flüssiggases am Einlass und der Druck des Flüssiggases p2 am Auslass folgende Ungleichung erfüllen: $p2/p1 > 1/3$, bevorzugt $p2/p1 > 1/5$, besonders bevorzugt $p2/p1 > 1/8$, weiter besonders bevorzugt $p2/p1 > 1/10$.

Aufgrund der Tatsache, dass sich das Verschlusselement bei den genannten Druckverhältnissen in die erste Stellung, d.h. in die Schließstellung, bewegt, wird verhindert, dass der Druck des Flüssiggases am Auslass einen Wert einnimmt, bei dem das Flüssiggas den flüssigen Aggregatszustand einnimmt.

In einer Gasflasche kann in der Praxis ein Druck von bis zu 16 bar herrschen, üblicherweise jedoch zwischen 3 bar und 6 bar. Angenommen das Flüssiggas weist am Einlass einen Druck p1 von 10 bar auf, nimmt das Verschlusselement die erste Stellung ein, wenn der Druck p2 des Flüssiggases am Auslass 3,3 bar, bevorzugt 2 bar, besonders bevorzugt 1,25 bar und besonders bevorzugt 1 bar beträgt. Hierbei handelt es sich jedoch lediglich um eine idealisierte Betrachtung. Abweichungen können beispielsweise aufgrund der hierin offenbarten Krafteinrichtung und/oder internen Reibungsverluste auftreten, die unter anderem von der Dichtung zwischen dem Verschlusselement und dem Körper bewirkt werden. Die grundsätzliche Wirkungsweise und Aussagen bleiben hiervon jedoch unberührt.

Vorzugsweise gilt F2 ≥ 3 * F1, bevorzugt F2 ≥ 5 * F1, besonders bevorzugt F2 ≥ 8 * F1, weiter besonders bevorzugt F2 ≥ 10 * F1. Auf diese Weise kann erreicht werden, dass das Verschlusselement die erste Position einnimmt, wenn ungefähr $p2/p1 > 1/3$, bevorzugt $p2/p1 > 1/5$, besonders bevorzugt $p2/p1 > 1/8$, weiter besonders bevorzugt $p2/p1 > 1/10$. Aufgrund z.B. der hierin offenbarten Krafteinrichtung und/oder internen Reibungsverluste, die unter anderem von der Dichtung zwischen dem Verschlusselement und dem Körper bewirkt werden, können Abweichungen zu diesen Ungleichungen auftreten. Die grundsätzliche Gesetzmäßigkeit bleibt hiervon jedoch unberührt.

Vorzugsweise gilt F2 ≥ 3 * F1, bevorzugt F2 ≥ 5 * F1, besonders bevorzugt F2 ≥ 8 * F1, weiter besonders bevorzugt F2 ≥ 10 * F1, wenn das Verschlusselement in der ersten und/oder zweiten und/oder dritten Stellung ist. Stärker bevorzugt gilt dies unabhängig von der Stellung des Verschlusselements.

Vorzugsweise gilt F2 ≤ 50 * F1, besonders bevorzugt F2 ≤ 20 * F1. Auf diese Weise wird sichergestellt, dass am Auslass ein ausreichender Druck des Flüssiggases vorherrscht.

Es hat sich gezeigt, dass ein Flächenverhältnis von zwischen F1/F2 = 1:2 und F1/F2 = 1:10 (d.h. F2 ≥ 2 * F1 und F2 ≤ 10 * F1), bevorzugt zwischen F1/F2 = 1:2,5 und F1/F2 = 1:4 (d.h. F2 ≥ 2,5 * F1 und F2 ≤ 4 * F1), besonders bevorzugt 1:3,33 (F2 = 3,33 * F1), besonders vorteilhaft ist. Auf diese Weise wird der Arbeitsdruck nachgeschalteter Aggregate (z.B. Regler, automatische Umschaltventile) auch bei einem niedrigeren Druck am Einlass nicht unterschritten, während eine Rückverflüssigung noch mindestens bis zu einem Druck von 10 bar am Einlass verhindert wird.

F1 beträgt beispielsweise zwischen 50 mm$^2$ und 80 mm$^2$, vorzugsweise zwischen 60 mm$^2$ und 70 mm$^2$, besonders bevorzugt ca. 66 mm$^2$. Beispielsweise kann die erste Verschlusselementfläche kreisförmig sein und einen Durchmesser von 10 mm sowie eine Durchgangsbohrung mit einem Durchmesser von 4 mm aufweisen. F2 beträgt beispielsweise zwischen 600 mm$^2$ und 800 mm$^2$, vorzugsweise zwischen 650 mm$^2$ und 750 mm$^2$, besonders bevorzugt ca. 690 mm$^2$. Beispielsweise kann die zweite Verschlusselementfläche kreisförmig sein und einen Durchmesser von 30 mm sowie eine Durchgangsbohrung mit einem Durchmesser von 4 mm aufweisen.

Vorzugsweise gilt F2 ≤ 50 * F1, besonders bevorzugt F2 ≤ 20 * F1, wenn das Verschlusselement in der ersten und/oder zweiten und/oder dritten Stellung ist. Stärker bevorzugt gilt dies unabhängig von der Stellung des Verschlusselements.

Vorzugsweise verhindert die Vorrichtung in der zweiten Stellung des Verschlusselements einen wesentlichen Durchfluss des Flüssiggases vom Einlass zum Auslass.

Unter der Angabe, dass ein wesentlicher Durchfluss verhindert wird, ist zu verstehen, dass in der zweiten Stellung des Verschlusselements ein geringfügiger Durchfluss von Flüssiggas vom Einlass zum Auslass der Vorrichtung möglich sein kann. Unter einem geringfügigen Durchfluss kann ein Durchfluss mit einer Strömungsrate < 40 l/h, bevorzugt < 30 l/h, besonders bevorzugt < 20 l/h verstanden werden. Dieser geringfügige Durchfluss kann beispielsweise durch die unten genannte Umgehung gewährleistet werden.

Wie nachfolgend erläutert, kann die Vorrichtung derart eingerichtet sein, dass das Verschlusselement bei einem plötzlichen Druckabfall, z.B. durch einen Schlauchabriss, am Auslass der Vorrichtung, sich in die zweite Stellung bewegt und die Vorrichtung bis auf den geringfügigen Durchfluss verschließt. Durch das Vorsehen des geringfügigen Durchflusses kann der Druck am Auslass der Vorrichtung nach einem solchen Druckabfall wieder kontinuierlich aufgebaut werden, falls die Störung, z.B. der Schlauchabriss, behoben wurde oder das Verschlusselement sich lediglich fehlerhaft oder aufgrund einer Fehlbedienung in die zweite Stellung bewegt hat. Wenn der Druck auf der Auslassseite der Vorrichtung wieder aufgebaut worden ist, bewegt sich das Verschlusselement von der zweiten Stellung wieder in die dritte Stellung zwischen der ersten Stellung und der zweiten Stellung, so dass die Vorrichtung wieder geöffnet wird.

Der geringfügige Durchfluss stellt jedoch bei einem tatsächlichen Schlauchabriss keine Gefahr dar.

Alternativ kann die Vorrichtung konfiguriert sein, dass sie den Durchfluss von Flüssiggas vom Einlass zum Auslass in der zweiten Stellung des Verschlusselements vollständig verhindert, d.h. ohne einen geringfügigen Durchfluss vom Einlass zum Auslass zu ermöglichen.

In diesem Fall kann beispielsweise eine hierin offenbarte Betätigungsvorrichtung vorgesehen sein, um das Verschlusselement manuell von der zweiten Stellung in die erste oder dritte Stellung zu bewegen.

Vorzugsweise nimmt das Verschlusselement die zweite Stellung ein, wenn beim Auslass der Vorrichtung ein Druckabfall des Flüssiggases, vorzugsweise ein plötzlicher Druckabfall durch einen Schlauchabriss, auftritt.

Mit anderen Worten kann die Vorrichtung auch eine Schlauchabrisssicherung und/oder eine Schlauchbruchsicherung bereitstellen.

Vorzugsweise weist die Vorrichtung eine Längsachse auf. Der Innenraum des Körpers ist bezüglich der Längsachse im Wesentlichen rotationssymmetrisch und das Verschlusselement ist bezüglich der Längsachse im Wesentlichen rotationssymmetrisch.

Im Rahmen der Offenbarung bezeichnet der Begriff "Axialrichtung" oder "axial" eine Richtung entlang der Längsachse.

Unter der Angabe im Wesentlichen ist zu verstehen, dass die allgemeine Form des Innenraums und/oder Verschlusselements rotationssymmetrisch um die Längsachse ist. Der Innenraum und/oder das Verschlusselement können z.B. Führungsrillen, Bohrungen oder dergleichen aufweisen, die die Rotationssymmetrie brechen. Dennoch gilt der Innenraum und/oder das Verschlusselement als rotationssymmetrisch um die Längsachse.

Vorzugsweise liegen der Einlass und der Auslass auf der Längsachse der Vorrichtung.

Auf diese Weise eignet sich die Vorrichtung für eine Montage in Längsrichtung der Gasleitung. Somit wird eine platzsparende Montage der Vorrichtung ermöglicht.

Vorzugsweise weist der Körperinnenraum einen ersten Innenraumabschnitt mit einem ersten Durchmesser und einen zweiten Innenraumabschnitt mit einem zweiten Durchmesser auf. Der erste Innenraumabschnitt ist näher beim Einlass als der zweite Innenraumabschnitt. Der zweite Durchmesser ist größer als der erste Durchmesser. Das Verschlusselement weist einen ersten Verschlusselementabschnitt mit der ersten wirksamen Verschlusselementfläche und einen zweiten Verschlusselementabschnitt mit der zweiten wirksamen Verschlusselementfläche auf, wobei der erste Verschlusselementabschnitt zumindest teilweise im ersten Innenraumabschnitt angeordnet ist und wobei der zweite Verschlusselementabschnitt zumindest teilweise im zweiten Innenraumabschnitt angeordnet ist.

Unter dem ersten bzw. zweiten Innenraumabschnitt kann sowohl das Volumen des entsprechenden Abschnitts verstanden werden als auch die Wandung des Körpers, der dieses Volumen umgrenzt.

Vorzugsweise weist die Vorrichtung eine erste Dichtung zwischen dem ersten Verschlusselementabschnitt und dem ersten Innenraumabschnitt und/oder Körperabschnitt und/oder eine zweite Dichtung zwischen dem zweiten Verschlusselementabschnitt und dem zweiten Innenraumabschnitt und/oder Körperabschnitt auf.

Die erste Dichtung kann vorzugsweise am ersten Verschlusselementabschnitt vorgesehen sein und/oder die zweite Dichtung kann vorzugsweise am zweiten Verschlusselementabschnitt vorgesehen sein. Die erste Dichtung kann durch einen oder mehrere Dichtungsringe oder eine Membran bereitgestellt sein und/oder die zweite Dichtung kann durch einen oder mehrere Dichtungsringe oder eine Membran bereitgestellt sein.

Auf diese Weise kann sichergestellt werden, dass auf die erste Verschlusselementseite nur der Druck des Flüssiggases am Einlass der Vorrichtung und auf die zweiten Verschlusselementseite nur der Druck des Flüssiggases am Auslass der Vorrichtung wirken, insbesondere wenn eine erste Dichtung am ersten Verschlusselementabschnitt und eine zweite Dichtung am zweiten Verschlusselementabschnitt vorgesehen sind.

Vorzugsweise ist die erste Dichtung eine Lippendichtung. Vorzugsweise ist die zweite Dichtung eine Lippendichtung. Auf diese Weise kann die Reibung zwischen dem Verschlusselement und dem Innenraum minimiert werden.

Vorzugsweise weist der Körperinnenraum eine zwischen dem ersten Innenraumabschnitt und dem zweiten Innenraumabschnitt angeordnete Innenraumschulterfläche auf. Vorzugsweise weist das Verschlusselement zwischen dem ersten Verschlusselementabschnitt und dem zweiten Verschlusselementabschnitt eine Verschlusselementschulterfläche auf.

Vorzugsweise ist ein Volumen zwischen der Innenraumschulterfläche und der Verschlusselementschulterfläche eingeschlossen ist, dessen Größe von der Stellung des Verschlusselements abhängt.

Vorzugsweise ist die Vorrichtung derart eingerichtet, dass das zwischen der Innenraumschulterfläche und das Verschlusselementschulterfläche eingeschlossene Volumen mit Umgebungsdruck beaufschlagt ist; und/oder der Körper weist vorzugsweise eine Öffnung auf, welche das zwischen der Innenraumschulterfläche und der Verschlusselementschulterfläche eingeschlossene Volumen mit der Umgebung verbindet.

Auf diese Weise wird die Funktion des Verschlusselements sichergestellt. Beispielsweise wird verhindert, dass sich bei der Bewegung des Verschlusselements in Richtung der zweiten Stellung im eingeschlossenen Volumen ein Unterdruck aufbauen kann, der das Verschlusselement in Richtung der ersten Stellung zieht.

Die Vorrichtung kann eine Krafteinrichtung, bevorzugt eine Federeinrichtung, aufweisen, die zum Anwenden einer Kraft in Richtung der zweiten Stellung auf das Verschlusselement eingerichtet ist, wenn sich das Verschlusselement in der ersten Stellung oder nahe der ersten Stellung befindet. Vorzugsweise beträgt die Kraft weniger als 6 N, stärker bevorzugt weniger als 5 N. Vorzugsweise weist die Krafteinrichtung eine Federkonstante von weniger als 3 N/mm, stärker bevorzugt weniger als 2 N/mm auf.

Vorzugsweise ist die Federeinrichtung eine Schraubenfeder oder Spiralfeder, insbesondere eine auf Druck belastete Schraubenfeder oder Spiralfeder. Besonders bevorzugt ist die Schrauben- oder Spiralfeder um den ersten Verschlusselementabschnitt herum angeordnet.

Die Krafteinrichtung kann alternativ beispielsweise auch in Form eines Magnets bereitgestellt werden, der das Verschlusselement abstößt, wenn sich dieser in der ersten Stellung oder nahe der ersten Stellung befindet.

Vorzugsweise ist die Kraft der Krafteinrichtung derart konfiguriert, dass die Krafteinrichtung das Verschlusselement in Richtung der zweiten Stellung bewegt, wenn der Druck des Flüssiggases am Einlass und am Auslass so gering ist, dass der Druck des Flüssiggases am Auslass einen Schwellwert unterschreitet, wobei der Schwellwert bevorzugt kleiner oder gleich ist als 0,1 bar, besonders bevorzugt 0,03 bar.

Vorzugsweise weist der Körperinnenraum eine zwischen dem ersten Innenraumabschnitt und dem zweiten Innenraumabschnitt angeordnete Innenraumschulterfläche auf. Weiterhin weist das Verschlusselement zwischen dem ersten Verschlusselementabschnitt und den zweiten Verschlusselementabschnitt vorzugsweise eine Verschlusselementschulterfläche auf. Die Kraftrichtung übt eine Druckkraft auf die Innenraumschulterfläche und die Verschlusselementschulterfläche aus, wenn sich das Verschlusselement in der ersten Stellung befindet.

Vorzugsweise ist die Krafteinrichtung eine Druckfeder, die zumindest in der ersten Stellung des Verschlusselements an der Innenraumschulterfläche und der Verschlusselementschulterfläche anliegt. Weiter bevorzugt wird die Druckfeder in der ersten Stellung des Verschlusselements komprimiert, so dass sie in der ersten Stellung des Verschlusselements eine Druckkraft auf die Innenraumschulterfläche und die Verschlusselementschulterfläche ausübt. Die Druckfeder kann auch über die erste Stellung des Verschlusselements hinaus an der Verschlusselementschulterfläche anliegen, muss jedoch nicht in jeder Stellung des Verschlusselements an der Verschlusselementschulterfläche anliegen. Die Druckfeder kann als Schrauben- oder Spiralfeder ausgebildet sein.

Unter der Innenraumschulterfläche und/oder der Verschlusselementschulterfläche können/kann auch eine Innenraumanlagefläche und/oder eine Verschlusselementanlagefläche verstanden werden. Vorzugsweise sind/ist die Innenraumschulterfläche und/oder die Verschlusselementschulterfläche senkrecht zur Axialrichtung des Verschlusselements ausgerichtet.

Mit anderen Worten stößt die Krafteinrichtung die Verschlusselementschulterfläche von der Innenraumschulterfläche in Richtung der zweiten Stellung weg.

Mittels dieser Krafteinrichtung kann sichergestellt werden, dass die Vorrichtung nicht verschließt, wenn der Druck am Einlass unter den Schwellwert, bevorzugt 0,1 bar, besonders bevorzugt 0,03 bar, fällt. Auf diese Weise kann einerseits eine komplette Entleerung der Gasflasche gewährleistet werden. Andererseits können die resultierenden Kräfte auf das Verschlusselement, wenn sich das Verschlusselement in der ersten Stellung oder nahe der ersten Stellung befindet, kleiner als die Reibungskräfte sein, die durch die eine oder die mehreren Dichtungen bewirkt werden, die zwischen Verschlusselement und Verschlusselementinnenraum vorgesehen ist/sind. Das heißt, dass die Krafteinrichtung eine sichere Funktion der Vorrichtung auch dann sicherstellen kann, wenn sich das Verschlusselement in der ersten Stellung und/oder nahe der ersten Stellung befindet.

Bei geringer Reibung, z.B. bei Verwendung einer Lippendichtung und/oder einer Membran für die erste und/oder zweite Dichtung, kann auf die Krafteinrichtung verzichtet oder eine Krafteinrichtung geringer Stärke verwendet werden. Eine solche Krafteinrichtung ist in diesem Fall vorzugsweise nicht erforderlich, um die Funktion der Vorrichtung zu gewährleisten.

Hierdurch wird die Vorrichtung in ihrer Konstruktion vereinfacht.

Vorzugsweise weist die Vorrichtung daher keine Krafteinrichtung auf, die eingerichtet ist, um eine Kraft auf das Verschlusselement in Richtung der ersten und/oder zweiten Stellung auszuüben.

Vorzugsweise ist im zwischen der Innenraumschulterfläche und der Verschlusselementschulterfläche eingeschlossenen Volumen keine Krafteinrichtung aufweist, die eingerichtet ist, um eine Kraft auf das Verschlusselement in Richtung der ersten und/oder zweiten Stellung auszuüben.

Auf diese Weise wird der Druck p2 des Flüssiggases am Auslass im Wesentlichen nur durch den Druck p1 des Flüssiggases am Einlass, die erste wirksame Verschlusselementfläche F1 und die zweite Wirksame Verschlusselementfläche F2 bestimmt:

$$p2 = p1 \, \frac{F2}{F1}$$

.

Alternativ kann eine Krafteinrichtung mit geringer Stärke verwendet werden. Unter einer solchen Krafteinrichtung mit geringer Stärke wird z.B. eine Krafteinrichtung verstanden, die in der ersten Stellung eine Kraft von weniger als 6 N, vorzugsweise weniger als 5 N, ausübt und/oder eine Federkonstante von weniger als 3 N/mm, vorzugsweise weniger als 2 N/mm hat.

Vorzugsweise weist der Körperinnenraum einen ersten Anschlag auf. In der ersten Stellung des Verschlusselements liegt die erste Verschlusselementseite abdichtend am ersten Anschlag, so dass der Durchfluss des Flüssiggases vom Einlass zum Auslass verhindert wird.

Vorzugsweise liegt der erste Anschlag derart an der ersten Verschlusselementseite auf, dass sich die Größe der ersten wirksame Verschlusselementfläche F1 um 20% oder weniger, vorzugsweise um 10% oder weniger, weiter bevorzugt nicht, ändert. Gleichzeitig kann der erste Anschlag eingerichtet sein, dass das Flüssiggas um ihn herum und/oder durch ihn hindurchfließen kann. Vorzugsweise kann der erste Anschlag derart eingerichtet sein, dass das Flüssiggas auch dann um den ersten Anschlag herum und/oder durch den ersten Anschlag hindurchfließen kann, wenn sich das Verschlusselement in der ersten Stellung befindet. Auf diese Weise kann erreicht werden, dass sich die Größe der ersten wirksamen Fläche F1 in der ersten Stellung des Verschlusselements nicht wesentlich von der Größe der ersten wirksamen Fläche F1 des Verschlusselements in der dritten und/oder zweiten Stellung des Verschlusselements unterscheidet.

Beim ersten Anschlag kann es sich um einen Einsatz handeln, der in den Körperinnenraum eingepasst (z.B. eingepresst oder eingeschraubt) ist. Der erste Anschlag kann jedoch auch integral und/oder einstückig mit dem Körper der Vorrichtung ausgebildet sein.

Vorzugsweise weist der Körperinnenraum einen zweiten Anschlag auf. In der zweiten Stellung liegt die zweite Verschlusselementseite des Verschlusselements vorzugsweise abdichtend am zweiten Anschlag an, so dass der wesentliche Durchfluss des Flüssiggases vom Einlass zum Auslass verhindert wird.

Vorzugsweise liegt der zweite Anschlag derart an der zweiten Verschlusselementseite auf, dass sich die Größe der zweiten wirksame Verschlusselementfläche F2 um 20% oder weniger, vorzugsweise um 10% oder weniger, weiter bevorzugt nicht, ändert. Gleichzeitig kann der zweite Anschlag eingerichtet sein, dass das Flüssiggas um ihn herum und/oder durch ihn hindurchfließen kann. Vorzugsweise kann der zweite Anschlag derart eingerichtet sein, dass das Flüssiggas auch dann um den zweiten Anschlag herum und/oder durch den weiten Anschlag hindurchfließen kann, wenn sich das Verschlusselement in der zweiten Stellung befindet. Auf diese Weise kann erreicht werden, dass sich die Größe der zweiten wirksamen Fläche F2 in der zweiten Stellung des Verschlusselements nicht wesentlich von der Größe der zweiten wirksamen Fläche F2 des Verschlusselements in der dritten und/oder ersten Stellung des Verschlusselements unterscheidet.

Beim zweiten Anschlag kann es sich um einen Einsatz handeln, der in den Körperinnenraum eingepasst (z.B. eingepresst oder eingeschraubt) ist. Der zweite Anschlag kann jedoch auch integral und/oder einstückig mit dem Körper der Vorrichtung ausgebildet sein.

Der erste Anschlag ist vorzugsweise näher beim Einlass angeordnet als der zweite Anschlag.

Vorzugsweise weist das Verschlusselement eine von der ersten Verschlusselementseite zur zweiten Verschlusselementseite durchgehende Bohrung auf, wobei die Vorrichtung in der dritten Stellung des Verschlusselements einen Durchfluss des Flüssiggases vom Einlass durch die Bohrung des Verschlusselements zum Auslass zulässt.

Unter der Bohrung kann jedweder Durchlass des Verschlusselements verstanden werden, der einen Durchfluss des Flüssiggases vorzugsweise größer als 900 l/h von der ersten Verschlusselementseite zur zweiten Verschlusselementseite ermöglicht. Vorzugsweise handelt es sich bei der Bohrung um eine koaxial zur Axialrichtung des Verschlusselements angeordnete Bohrung.

Vorzugsweise hat der Durchlass senkrecht zur Axialrichtung einen lichten Querschnitt, der größer ist als 9 mm², besonders bevorzugt größer als 13 mm².

Vorzugsweise dichtet der erste Anschlag in der ersten Stellung des Verschlusselements die Bohrung ab, insbesondere indem der erste Anschlag am Verschlusselement auf der ersten Verschlusselementseite im Bereich der Bohrung dichtend anliegt.

Vorzugsweise liegt der erste Anschlag in der ersten Stellung des Verschlusselements an einer Kante der Bohrung des Verschlusselements auf der ersten Verschlusselementseite an. Besonders bevorzugt ist an der auf der ersten Verschlusselementseite angeordneten Kante der Bohrung des Verschlusselements eine ringförmige Dichtung angeordnet, mit der der Anschlag dichtet (z. B. in die der Anschlag eingreift), wenn sich das Verschlusselement in der ersten Stellung befindet.

Vorzugsweise liegt ein überwiegender Teil der ersten wirksamen Verschlusselementfläche in der ersten Stellung nicht am ersten Anschlag an, vorzugsweise mindestens 60%, mindestens 80% oder mindestens 90% der ersten wirksamen Verschlusselementfläche.

Vorzugsweise dichtet der zweite Anschlag in der zweiten Stellung des Verschlusselements die Bohrung ab, insbesondere indem der zweite Anschlag am Verschlusselement auf der zweiten Verschlusselementseite im Bereich der Bohrung dichtend anliegt.

Vorzugsweise liegt der zweite Anschlag in der zweiten Stellung des Verschlusselements an einer Kante der Bohrung des Verschlusselements auf der zweiten Verschlusselementseite an. Besonders bevorzugt ist an der auf der zweiten Verschlusselementseite angeordneten Kante der Bohrung des Verschlusselements eine ringförmige Dichtung angeordnet, mit der der Anschlag dichtet (z. B. in die der Anschlag eingreift), wenn sich das Verschlusselement in der zweiten Stellung befindet.

Vorzugsweise liegt ein überwiegender Teil der zweiten wirksamen Verschlusselementfläche in der zweiten Stellung nicht am zweiten Anschlag an, vorzugsweise mindestens 60%, mindestens 80% oder mindestens 90% der zweiten wirksamen Verschlusselementfläche.

Auf diese Weise kann ein effektives Verschließen der Bohrung des Verschlusselements sichergestellt werden. Gleichzeitig kann sich das Verschlusselement aufgrund der kleinen Kontaktfläche mit dem ersten und/oder zweiten Anschlag auch leicht vom ersten und/oder zweiten Anschlag lösen.

Vorzugsweise weist das Verschlusselement auf der ersten Verschlusselementseite eine dritte Dichtung auf, um eine Dichtung zwischen dem ersten Anschlag und der Bohrung herzustellen. Vorzugsweise weist das Verschlusselement auf der zweiten Verschlusselementseite eine vierte Dichtung auf, um eine Dichtung zwischen dem zweiten Anschlag und der Bohrung herzustellen.

Auf diese Weise wird sichergestellt, dass der erste bzw. zweite Anschlag effektiv mit der Bohrung auf ersten bzw. zweiten Verschlusselementseite abdichtet.

Vorzugsweise ist die dritte Dichtung integral und/oder einstückig mit der ersten Membran ausgebildet. Vorzugsweise ist die vierte Dichtung integral und/oder einstückig mit der zweiten Membran ausgebildet. Auf diese Weise kann die Anzahl der Teile der Vorrichtung verringert werden.

Vorzugsweise stellt die Vorrichtung eine Umgehung für den zweiten Anschlag bereit, um in der zweiten Stellung des Verschlusselements einen geringfügigen Durchfluss des Flüssiggases vom Einlass zum Auslass zuzulassen.

Mit anderen Worten ist unter der Umgehung ein Umgehungsströmungspad zu verstehen, entlang dessen in der zweiten Stellung des Verschlusselements der geringfügige Durchfluss des Flüssiggases vom Einlass zum Auslass ermöglicht wird. Der Querschnitt der Umgehung kann dabei derart konfiguriert sein, dass lediglich ein geringfügiger Durchfluss des Flüssiggases vom Einlass zum Auslass zugelassen wird.

Vorzugsweise weist die Umgehung senkrecht zur Flussrichtung des Gases einen lichten Querschnitt von weniger als 0,7 mm$^2$ oder bevorzugt von weniger als 0,2 mm$^2$ auf.

Auf diese Weise kann sichergestellt werden, dass lediglich ein geringfügiger Durchfluss des Flüssiggases ermöglicht wird.

Vorzugsweise weist die Umgehung einen Umgehungskanal im Körper und/oder im Verschlusselement und/oder im zweiten Anschlag und/oder in einer Dichtung auf, die am zweiten Anschlag anliegt.

Vorzugsweise ist der Umgehungskanal durch eine Bohrung im zweiten Anschlag bereitgestellt.

Vorzugsweise weist die Vorrichtung eine Betätigungseinrichtung auf, um das Verschlusselement manuell aus der zweiten Stellung heraus zu bewegen.

Mit anderen Worten kann das Verschlusselement manuell aus der zweiten Stellung in die dritte Stellung und/oder in Richtung der ersten Stellung bewegt werden.

Eine weitere Ausführungsform betrifft ein Flüssiggasleitungssystem aufweisend eine Flüssiggasquelle, vorzugsweise eine Flüssiggasflasche, und eine Vorrichtung wie hierin offenbart, wobei die Vorrichtung bevorzugt unmittelbar am Auslass der Flüssiggasquelle angeschlossen ist.

Vorzugsweise ist die Vorrichtung ohne Zwischenschaltung eines Schlauches, eines Druckreglers (oder Druckminderers) und/oder einer Schlauchbruchsicherung an der Flüssiggasquelle angeschlossen.

Auf diese Weise kann sichergestellt werden, dass zwischen der Flüssiggasquelle und der Vorrichtung keine Komponente angeordnet ist, die durch eine mögliche Rückverflüssigung des Flüssiggases beeinträchtigt oder beschädigt werden kann.

Vorzugsweise ist die Vorrichtung so ausgelegt, dass in der dritten Stellung des Verschlusselements der Druck vom Einlass zum Auslass um weniger als 1/6, vorzugsweise um weniger als 1/8 oder weniger als 1/10 abfällt. In diesem Fall wird der Druck stromabwärts der Vorrichtung vorzugsweise durch einen Druckregler geregelt.

Eine weitere Ausführungsform betrifft ein Fahrzeug, vorzugsweise ein Caravan, ein Reisemobil oder ein Boot, aufweisend eine Vorrichtung wie hierin offenbart oder ein Leitungssystem wie hierin offenbart.

Eine weitere Ausführungsform betrifft die Verwendung einer Vorrichtung zur Verhinderung einer Rückverflüssigung eines Flüssiggases in einem Flüssiggasleitungssystem, vorzugsweise mit den hierin offenbarten Merkmalen, in einem Leitungssystem, vorzugsweise mit den hierin offenbarten Merkmalen, oder einem Fahrzeug, vorzugsweise mit den hierin offenbarten Merkmalen.

Das hierin im Rahmen der Erfindung offenbarte Verschlusselement kann auch als Kolben bezeichnet werden.

Die Erfindung und/oder bevorzugte Ausführungsformen der Erfindung werden auch in den folgenden Aspekten beschrieben und offenbart.

1. Vorrichtung zur Verhinderung einer Rückverflüssigung eines Flüssiggases in einem Flüssiggasleitungssystem, aufweisend:

einen Körper mit einem Einlass, einem Auslass und einem Körperinnenraum;

ein im Körperinnenraum angeordnetes doppelseitig wirkendes Verschlusselement;

wobei das Verschlusselement im Körperinnenraum zwischen einer ersten Stellung und einer zweiten Stellung verschiebbar ist;

wobei der Verschlusselement in seiner ersten Stellung einen Durchfluss des Flüssiggases vom Einlass zum Auslass verhindert;

wobei die Vorrichtung zumindest in einer dritten Stellung des Verschlusselements zwischen der ersten Stellung und der zweiten Stellung einen Durchfluss des Flüssiggases vom Einlass zum Auslass zulässt;

wobei das Verschlusselement eine dem Einlass zugewandte erste Verschlusselementseite mit einer ersten wirksamen Verschlusselementfläche F1 und eine dem Auslass zugewandte zweite Verschlusselementseite mit einer zweiten wirksamen Verschlusselementfläche F2 aufweist;

wobei die zweite wirksame Verschlusselementfläche größer ist als die erste wirksame Verschlusselementfläche.

2. Vorrichtung nach Aspekt 1,

wobei der Körper einen ersten Körperabschnitt und einen zweiten Körperabschnitt aufweist;

wobei das Verschlusselement einen ersten Verschlusselementabschnitt und einen zweiten Verschlusselementabschnitt aufweist;

wobei das Verschlusselement eine erste Dichtung zwischen dem ersten Verschlusselementabschnitt und dem ersten Körperabschnitt und/oder eine zweite Dichtung zwischen dem zweiten Verschlusselementabschnitt und dem zweiten Körperabschnitt aufweist.

3. Vorrichtung nach Aspekt 2,
wobei die erste Dichtung eine erste Membran aufweist und/oder die zweite Dichtung eine zweite Membran aufweist.

4. Vorrichtung nach Aspekt 3,
wobei die erste Membran und/oder die zweite Membran jeweils ein Elastomer, Acrylnitril-Butadien-Kautschuk und/oder Fluorkautschuk aufweist.

5. Vorrichtung nach Aspekt 3 oder 4,
wobei die erste Membran und/oder die zweite Membran eine Härte zwischen 55 und 85 IRHD-M aufweist.

6. Vorrichtung nach einem der vorangehenden Aspekte, wobei die Vorrichtung geeignet ist, um mit Flüssiggas zu operieren, das am Einlass mit einem Druck im Bereich zwischen 1 bar und 16 bar, vorzugsweise zwischen 3 bar und 6 bar, bereitgestellt wird.

7. Vorrichtung nach einem der vorangehenden Aspekte, wobei sich die Größe der ersten wirksamen Verschlusselementfläche F1 in der ersten Stellung des Verschlusselements um 20% oder weniger, vorzugsweise 10% oder weniger, von der Größe der ersten wirksamen Verschlusselementfläche F1 in der zweiten und/oder dritten Stellung des Verschlusselements unterscheidet oder wobei die Größe der ersten wirksamen Verschlusselementfläche F1 in der ersten Stellung des Verschlusselements und in der dritten Stellung des Verschlusselements weiter bevorzugt gleich ist.

8. Vorrichtung nach einem der vorangehenden Aspekte, wobei sich die Größe der zweiten wirksamen Verschlusselementfläche F2 in der zweiten Stellung des Verschlusselements um 20% oder weniger, vorzugsweise 10% oder weniger, von der Größe der zweiten wirksamen Verschlusselementfläche F1 in der ersten und/oder dritten Stellung des Verschlusselements unterscheidet oder wobei die Größe der zweiten wirksamen Verschlusselementfläche F2 in der zweiten Stellung des Verschlusselements und in der dritten Stellung des Verschlusselements weiter bevorzugt gleich ist.

9. Vorrichtung nach einem der vorangehenden Aspekte, wobei die Vorrichtung derart konfiguriert ist, vorzugsweise die erste wirksame Verschlusselementfläche und die zweite wirksame Verschlusselementfläche derart aufeinander abgestimmt sind, dass das Verschlusselement die erste Stellung einnimmt, wenn der Druck des Flüssiggases am Auslass größer ist als der dritte Teil, bevorzugt der fünfte Teil, besonders bevorzugt der achte Teil, weiter besonders bevorzugt der zehnte Teil des Drucks des Flüssiggases am Einlass.

10. Vorrichtung nach einem der vorangehenden Aspekte,
wobei $F2 \geq 2 * F1$ und/oder $F2 \leq 10 * F1$, bevorzugt $F2 \geq 2,5 * F1$ und/oder $F2 \leq 4 * F1$, besonders bevorzugt $F2 = 3,33 * F1$.

11. Vorrichtung nach einem der vorangehenden Aspekte, wobei die Vorrichtung in der zweiten Stellung des Verschlusselements einen wesentlichen Durchfluss des Flüssiggases vom Einlass zum Auslass verhindert.

12. Vorrichtung nach einem der vorangehenden Aspekte, wobei das Verschlusselement die zweite Stellung einnimmt, wenn beim Auslass der Vorrichtung ein Druckabfall des Flüssiggases, vorzugsweise ein plötzlicher Druckabfall durch einen Schlauchabriss, auftritt.

13. Vorrichtung nach einem der vorangehenden Aspekte,

     wobei die Vorrichtung eine Längsachse aufweist;
     wobei der Innenraum des Körpers bezüglich der Längsachse im Wesentlichen rotationssymmetrisch ist;
     wobei das Verschlusselement bezüglich der Längsachse im Wesentlichen rotationssymmetrisch ist.

14. Vorrichtung nach Aspekt 13, wobei der Einlass und der Auslass in einer Achse mit der Längsachse der Vorrichtung liegen.

15. Vorrichtung einem der vorangehenden nach Aspekte,

     wobei der Körperinnenraum einen ersten Innenraumabschnitt mit einem ersten Durchmesser und eine zweiten Innenraumabschnitt mit einem zweiten Durchmesser aufweist;
     wobei der erste Innenraumabschnitt näher beim Einlass ist als der zweite Innenraumabschnitt;
     wobei der zweite Durchmesser größer ist als der erste Durchmesser;
     wobei das Verschlusselement einen ersten Verschlusselementabschnitt mit der ersten wirksamen Verschlusselementfläche und einen zweiten Verschlusselementabschnitt mit der zweiten wirksamen Verschlusselementfläche aufweist;
     wobei der erste Verschlusselementabschnitt zumindest teilweise im ersten Innenraumabschnitt angeordnet ist;
     wobei der zweite Verschlusselementabschnitt zumindest teilweise im zweiten Innenraumabschnitt angeordnet ist.

16. Vorrichtung nach Aspekt 15, ferner aufweisend:

     eine erste Dichtung zwischen dem ersten Verschlusselementabschnitt und dem ersten Innenraumabschnitt; und/oder
     eine zweite Dichtung zwischen dem zweiten Verschlusselementabschnitt und dem zweiten Innenraumabschnitt.

17. Vorrichtung nach Aspekt 11 oder 12, wobei der Körperinnenraum eine zwischen dem ersten Innenraumabschnitt und dem zweiten Innenraumabschnitt angeordnete Innenraumschulterfläche aufweist;
wobei das Verschlusselement zwischen dem ersten Verschlusselementabschnitt und dem zweiten Verschlusselementabschnitt eine Verschlusselementschulterfläche aufweist.

18. Vorrichtung nach Aspekt 17, wobei ein Volumen zwischen der Innenraumschulterfläche und der Verschlusselementschulterfläche eingeschlossen ist, dessen Größe von der Stellung des Verschlusselements abhängt.

19. Vorrichtung nach Aspekt 18, wobei die Vorrichtung derart eingerichtet ist, dass das zwischen der Innenraumschulterfläche und der Verschlusselementschulterfläche eingeschlossene Volumen mit Umgebungsdruck beaufschlagt ist; und/oder
wobei der Körper eine Öffnung aufweist, welche das zwischen der Innenraumschulterfläche und der Verschlusselementschulterfläche eingeschlossene Volumen mit der Umgebung verbindet.

20. Vorrichtung nach Aspekt 18 oder 19, wobei die Vorrichtung im zwischen der Innenraumschulterfläche und der Verschlusselementschulterfläche eingeschlossenen Volumen keine Krafteinrichtung aufweist, die eingerichtet ist, um eine Kraft auf das Verschlusselement in Richtung der ersten und/oder zweiten Stellung auszuüben.

21. Vorrichtung nach einem der vorangehenden Aspekte, wobei die Vorrichtung keine Krafteinrichtung aufweist, die eingerichtet ist, um eine Kraft auf das Verschlusselement in Richtung der ersten und/oder zweiten Stellung auszuüben.

22. Vorrichtung nach einem der vorangehenden Aspekte, ferner aufweisend:
eine Krafteinrichtung, vorzugsweise eine Federeinrichtung, eingerichtet zum Anwenden einer Kraft in Richtung der zweiten Stellung auf das Verschlusselement, wenn sich das Verschlusselement in der ersten Stellung befindet.

23. Vorrichtung nach Aspekt 22,

     wobei die Kraft der Krafteinrichtung derart konfiguriert ist, dass die Krafteinrichtung das Verschlusselement in Richtung der zweiten Stellung bewegt, wenn der Druck des Flüssiggases am Einlass und am Auslass so gering ist, dass der Druck des Flüssiggases am Auslass einen Schwellwert unterschreitet;
     wobei der Schwellwert vorzugsweise kleiner oder gleich ist als 0,1 bar, bevorzugt 0,03 bar.

24. Vorrichtung nach Aspekt 22 oder 23 und einem der Aspekte 17 bis 19,
wobei die Federeinrichtung eine Druckkraft auf die Innenraumschulterfläche und die Verschlusselementschulterfläche ausübt, wenn sich das Verschlusselement in der ersten Stellung befindet.

25. Vorrichtung nach einem der vorangehenden Aspekte,

wobei der Körperinnenraum einen ersten Anschlag aufweist;
wobei die erste Verschlusselementseite in der ersten Stellung des Verschlusselements abdichtend am ersten Anschlag anliegt und so den Durchfluss des Flüssiggases vom Einlass zum Auslass verhindert.

26. Vorrichtung nach einem der vorangehenden Aspekte,

wobei der Körperinnenraum einen zweiten Anschlag aufweist;
wobei die zweite Verschlusselementseite in der zweiten Stellung des Verschlusselements abdichtend am zweiten Anschlag anliegt und so den wesentlichen Durchfluss des Flüssiggases vom Einlass zum Auslass verhindert.

27. Vorrichtung nach Aspekt 26, wobei die Vorrichtung eine Umgehung für den zweiten Anschlag bereitstellt, um in der zweiten Stellung des Verschlusselements einen geringfügigen Durchfluss des Flüssiggases vom Einlass zum Auslass zuzulassen.

28. Vorrichtung nach Aspekt 27, wobei die Umgehung senkrecht zur Flussrichtung des Gases einen lichten Querschnitt von weniger als 0,7 mm$^2$ oder bevorzugt von weniger als 0,2 mm$^2$ aufweist.

29. Vorrichtung nach Aspekt 27 oder 28, wobei die Umgehung vorzugsweise durch einen Umgehungskanal im Körper und/oder im Verschlusselement und/oder im zweiten Anschlag und/oder in einer Dichtung, die am zweiten Anschlag anliegt, bereitgestellt ist.

30. Vorrichtung nach Aspekt 27, 28 oder 29, wobei der Umgehungskanal vorzugsweise durch eine Bohrung im zweiten Anschlag bereitgestellt ist.

31. Vorrichtung nach einem der vorangehenden Aspekte,

wobei das Verschlusselement eine von der ersten Verschlusselementseite zur zweiten Verschlusselementseite durchgehende Bohrung aufweist;
wobei die Vorrichtung in der dritten Stellung des Verschlusselements einen Durchfluss des Flüssiggases vom Einlass durch die Bohrung des Verschlusselements zum Auslass zulässt.

32. Vorrichtung nach Aspekt 31, wobei der erste Anschlag in der ersten Stellung des Verschlusselements an einer Kante der Bohrung des Verschlusselements auf der ersten Verschlusselementseite anliegt.

33. Vorrichtung nach Aspekt 31 oder 32, wobei der zweite Anschlag in der zweiten Stellung des Verschlusselements an einer Kante der Bohrung des Verschlusselements auf der zweiten Verschlusselementseite anliegt.

34. Vorrichtung nach einem der Aspekte 25 bis 33,

wobei das Verschlusselement auf der ersten Verschlusselementseite eine dritte Dichtung aufweist, um eine Dichtung zwischen dem ersten Anschlag und der Bohrung herzustellen; und/oder
wobei das Verschlusselement auf der zweiten Verschlusselementseite eine vierte Dichtung aufweist, um eine Dichtung zwischen dem zweiten Anschlag und der Bohrung herzustellen.

35. Vorrichtung nach Aspekt 34;

wobei die dritte Dichtung integral mit der ersten Membran ausgebildet ist; und/oder
wobei die vierte Dichtung integral mit der zweiten Membran ausgebildet ist.

36. Vorrichtung nach einem der vorangehenden Aspekte, wobei die Vorrichtung eine Betätigungseinrichtung aufweist, um den Verschlusselement manuell aus der zweiten Stellung heraus zu bewegen.

37. Flüssiggasleitungssystem aufweisend:

eine Flüssiggasquelle, vorzugsweise eine Flüssiggasflasche; und
eine Vorrichtung nach einem der vorangehenden Aspekte;
wobei die Vorrichtung vorzugsweise unmittelbar am Auslass der Flüssiggasquelle angeschlossen ist.

38. Fahrzeug, vorzugsweise Caravan oder Reisemobil, aufweisend eine Vorrichtung nach einem der Aspekte 1 bis 36 oder ein Leitungssystem nach Aspekt 37.

39. Verwendung einer Vorrichtung zur Verhinderung einer Rückverflüssigung eines Flüssiggases in einem Flüssiggasleitungssystem, vorzugsweise nach einem der Aspekte 1 bis 36, in einem Leitungssystem, vorzugsweise nach Aspekt 37, oder einem Fahrzeug, vorzugsweise nach Aspekt 38.

Weitere Ausführungsformen, Aspekte und Details der Erfindung werden mit Bezug auf die in den Zeichnungen gezeigten Ausführungsbeispiele der Erfindung beschrieben. Hierbei bezeichnen gleiche Bezugszeichen gleiche oder entsprechende Elemente. Gleiche oder entsprechende Elemente können jedoch auch mit unterschiedlichen Bezugszeichen bezeichnet sein. Die Zeichnungen stellen eine beispielhafte Ausführung der Erfindung dar, sollen den Gegenstand der Erfindung jedoch nicht einschränken.

Es zeigen:

Fig. 1 eine perspektivische Schnittansicht einer Vorrichtung zur Verhinderung einer Rückverflüssigung eines Flüssiggases in einem Flüssiggasleitungssystem gemäß einem Ausführungsbeispiel;

Fig. 2A eine Querschnittansicht der in Fig. 1 gezeigten Vorrichtung mit dem Verschlusselement in der ersten Stellung;

Fig. 2B eine Querschnittansicht der in Fig. 1 gezeigten Vorrichtung mit dem Verschlusselement in der dritten Stellung;

Fig. 2C eine Querschnittansicht der in Fig. 1 gezeigten Vorrichtung mit dem Verschlusselement in der zweiten Stellung;

Fig. 3 ein Flüssiggasleitungssystem aufweisend eine Gasflasche mit einer daran angeschlossenen Vorrichtung zur Verhinderung einer Rückverflüssigung eines Flüssiggases in dem Flüssiggasleitungssystem;

Fig. 4 ein Fahrzeug;

Fig. 5 eine Querschnittansicht einer Vorrichtung zur Verhinderung einer Rückverflüssigung eines Flüssiggases in einem Flüssiggasleitungssystem gemäß einem weiteren Ausführungsbeispiel.

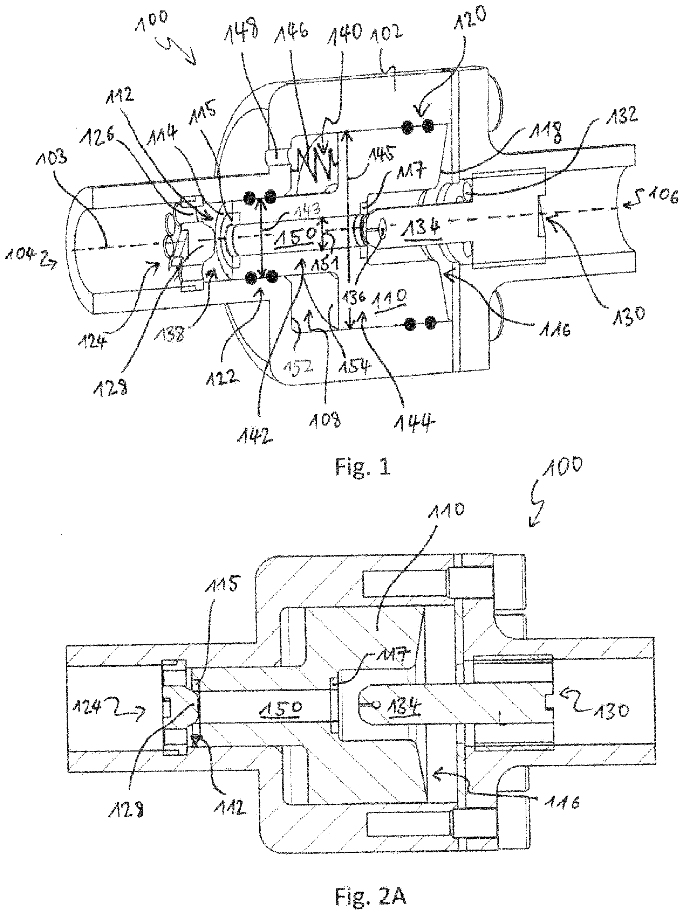

In Figur 1 ist eine Vorrichtung 100 zur Verhinderung einer Rückverflüssigung eines Flüssiggases in einem Flüssiggasleitungssystem gemäß einem Ausführungsbeispiel gezeigt. Die Vorrichtung 100 weist einen Körper 102 mit einem Einlass 104, einem Auslass 106 und einem Körperinnenraum 108 auf. Im Körperinnenraum 108 ist ein doppelseitig wirkender Verschlusselement 110 angeordnet. Der Körper 102 und der Verschlusselement 110 sind um eine Längsachse 103 der Vorrichtung im Wesentlichen rotationssymmetrisch. Der Verschlusselement 110 ist derart im Körperinnenraum 108 gelagert, dass er nur entlang der der Längsachse 106, d.h. in Axialrichtung, bewegbar ist.

Der Verschlusselement 110 weist eine erste Verschlusselementseite 112, die dem Einlass 104 zugewandt ist, und eine zweite Verschlusselementseite 116 auf, die dem Auslass 106 zugewandt ist. Die erste Verschlusselementseite 112 weist eine erste wirksame Verschlusselementfläche F1 114 und die zweite Verschlusselementseite 116 weist eine zweite wirksame Verschlusselementfläche F2 118 auf. Unter der ersten wirksamen Verschlusselementfläche 114 ist eine Projektion der ersten Verschlusselementseite 112 entlang der Längsachse 103, d.h. in Axialrichtung des Verschlusselements, auf eine gedachte, senkrecht zur Längsachse 103 angeordnete Projektionsfläche zu verstehen. Ebenso ist unter der zweiten wirksamen Verschlusselementfläche 118 eine Projektion der zweiten Verschlusselementseite 116 entlang der Längsachse 103, d.h. in Axialrichtung des Verschlusselements, auf eine gedachte, senkrecht zur Längsachse 103 angeordnete Projektionsfläche zu verstehen. Mit anderen Worten ist unter der ersten wirksamen Verschlusselementfläche 114 die Fläche der ersten Verschlusselementseite 112 zu verstehen, auf die der im Bereich des Einlasses 104 herrschende Druck des Flüssiggases wirkt, um den Verschlusselement 102 in Axialrichtung zu bewegen. Analog ist unter der zweiten wirksamen Verschlusselementfläche 118 die Fläche der zweiten Verschlusselementseite 116 zu verstehen, auf die der im Bereich des Auslasses 106 herrschende Druck des Flüssiggases wirkt, um den Verschlusselement 102 in Axialrichtung zu bewegen. Weiterhin weist der Verschlusselement eine Bohrung 150 zwischen der ersten Verschlusselementseite 112 und der zweiten Verschlusselementseite 116 auf, wobei die Bohrung 150 einen Durchmesser (DK) 151 von beispielsweise ca. 4 mm aufweist. Wie der Fachmann erkennen wird, muss die Bohrung 150 nicht unbedingt durch Bohren hergestellt werden. Es kann sich hierbei auch um ein anderweitig hergestelltes Durchgangsloch handeln.

Der Körperinnenraum 108 weist einen ersten Innenraumabschnitt 138 und einen zweiten Innenraumabschnitt 140 auf. Der Verschlusselement 110 weist entsprechend einen ersten Verschlusselementabschnitt 142 und einen zweiten Verschlusselementabschnitt 144 auf, wobei der erste Verschlusselementabschnitt 142 zumindest teilweise im ersten Innenraumabschnitt 138 aufgenommen ist und der zweite Verschlusselementabschnitt 144 im zweiten Innenraumabschnitt 140 aufgenommen ist. Je nach Stellung des Verschlusselements 110 ist der erste Verschlusselementabschnitt 142 weiter oder weniger weit im ersten Innenraumabschnitt 138 angeordnet. Der erste Innenraumabschnitt 138 und der erste Verschlusselementabschnitt weisen beispielsweise jeweils einen Durchmesser (D1) 143 von ca. 10 mm auf, wobei der Durchmesser des ersten Verschlusselementabschnitts 142 geringfügig, vorzugsweise um 0,1 mm, kleiner als der Durchmesser des ersten Innenraumabschnitts 138 ist, um eine gleitende Lagerung des Verschlusselements 110 im Körperinnenraum 108 zu gewährleisten. Entsprechend weisen der zweite Innenraumabschnitt 140 und der zweite Verschlusselementabschnitt 144 beispielsweise einen Durchmesser (D2) 145 von ca. 25 mm auf, wobei der Durchmesser des zweiten Verschlusselementabschnitts 144 geringfügig, vorzugsweise um 0,1 mm, kleiner als der Durchmesser des zweiten Innenraumabschnitts 140 ist.

Zwischen dem ersten Verschlusselementabschnitt 142 und dem ersten Innenraumabschnitt 138 bzw. dem ersten Körperabschnitt ist eine erste Dichtung 122 angeordnet, die beispielsweise in Form von zwei am ersten Verschlusselementabschnitt 142 angebrachten und axial voneinander beanstandeten Ringdichtungen ausgebildet sind. Entsprechend ist zwischen dem zweiten Verschlusselementabschnitt 144 und dem zweiten Innenraumabschnitt 140 bzw. dem zweiten Körperabschnitt eine zweite Dichtung 120 angeordnet, die beispielsweise in Form von zwei am zweiten Verschlusselementabschnitt 144 angebrachten und axial voneinander beabstandeten Ringdichtungen ausgebildet sind.

Mit dem ersten Durchmesser (D1) 143, dem zweiten Durchmesser (D2) 145 und dem Durchmesser (DK) 151 der Bohrung 150 durch den Verschlusselement 110 beträgt die erste wirksame Verschlusselementfläche (F1) 114

$$F1 = \frac{\pi}{4}(D1^2 - DK^2).$$

Entsprechend beträgt die zweite wirksame Verschlusselementfläche (F2) 116

$$F2 = \frac{\pi}{4}(D2^2 - DK^2).$$

Die Vorrichtung 100 weist weiterhin einen ersten Anschlag 124 und einen zweiten Anschlag 130 auf, die jeweils in dem Körperinnenraum 108 eingepasst sind. Der erste Anschlag 124 ist zwischen dem Einlass 104 und dem ersten Innenraumabschnitt 138 angeordnet und der zweite Anschlag 130 ist zwischen dem Auslass 106 und dem zweiten Innenraumabschnitt 140 angeordnet.

Der erste Anschlag 124 weist einen in den ersten Innenraumabschnitt 140 ragenden ersten zentralen Vorsprung 128 sowie eine oder mehrere um den ersten zentralen Vorsprung 128 angeordnete erste Durchgangsöffnungen 126 auf. Der erste zentrale Vorsprung 128 ist eingerichtet, um die Öffnung der Bohrung 150 auf der ersten Verschlusselementseite 112 zu verschließen. Dazu weist die erste Verschlusselementseite 112 vorzugsweise eine um die Öffnung der Bohrung 150 angeordnete ringförmige dritte Dichtung 115 auf, die eingerichtet ist, um am ersten zentralen Vorsprung 128 dichtend anzuliegen, um die Öffnung der Bohrung 150 auf der ersten Verschlusselementseite 112 gasdicht zu verschließen. Die ersten Durchgangsöffnungen 126 gewährleisten, dass das Flüssiggas durch den ersten Anschlag 124 fließen kann, wenn sich der Verschlusselement 110 nicht in der ersten Stellung befindet. Entsprechend weist der zweite Anschlag 130 einen in den zweiten Innenraumabschnitt 140 ragenden zweiten zentralen Vorsprung 134 sowie eine oder mehrere um den zweiten zentralen Vorsprung 134 angeordnete zweite Durchgangsöffnungen 132 auf. Der zweite zentrale Vorsprung 134 ist eingerichtet, um die Öffnung der Bohrung 150 auf der zweiten Verschlusselementseite 116 zu verschließen. Dazu weist die zweite Verschlusselementseite 116 vorzugsweise eine um die Öffnung der Bohrung 150 angeordnete ringförmige Dichtung 117 auf, die eingerichtet ist, um am zweiten zentralen Vorsprung 134 dichtend anzuliegen, um die Öffnung der Bohrung 150 auf der zweiten Verschlusselementseite 116 gasdicht zu verschließen. Die zweiten Durchgangsöffnungen 132 gewährleisten, dass das Flüssiggas durch den zweiten Anschlag 130 fließen kann, wenn sich der Verschlusselement 110 nicht in der zweiten Stellung befindet.

Die Vorrichtung weist ferner eine Umgehung 136 auf, die beispielsweise in Form einer Bohrung im zweiten zentralen Vorsprung 134 des zweiten Anschlags vorgesehen sein kann.

Zwischen dem ersten Innenraumabschnitt 138 und dem zweiten Innenraumabschnitt 140 weist der Körper 102 eine ringförmige Innenraumschulterfläche 152 auf, die beispielsweise senkrecht zur Achse 103 ausgerichtet ist. Entsprechend weist der Verschlusselement 110 zwischen dem ersten Verschlusselementabschnitt 142 und dem zweiten Verschlusselementabschnitt 144 eine ringförmige Verschlusselementschulterfläche 154 auf, die beispielsweise senkrecht zur Achse 103 ausgerichtet ist.

Zwischen der Innenraumschulterfläche 152 und der Verschlusselementschulterfläche 154 wird ein Volumen eingeschlossen, dessen Größe abhängig von der Stellung des Verschlusselements 110 variiert. Da dieses Volumen aufgrund der Dichtungen 120, 122 gegenüber dem Einlass 104 und dem Auslass 106 abgedichtet ist, ist eine Bohrung und/oder Öffnung im Körper 148 vorgesehen, die dieses Volumen mit der Umgebung verbindet, um eine Bewegung des Verschlusselements 110 im Körperinnenraum 108 zu gewährleisten.

Zwischen der Innenraumschulterfläche 152 und der Verschlusselementschulterfläche 154 kann eine Krafteinrichtung 146 angeordnet sein, die beispielsweise in Form einer um den ersten Verschlusselementabschnitt 142 angeordneten Spiralfeder ausgebildet sein kann. Diese Krafteinrichtung 146 kann wie hierin offenbart zum einen eine zuverlässige Funktion der Vorrichtung gewährleisten, wenn sich der Verschlusselement in der ersten Stellung befindet, und zum anderen, dass die Flüssiggasquelle vollständig oder fast vollständig entleert werden kann.

Bevorzugt weist die Vorrichtung jedoch keine solche Krafteinrichtung auf. Beispielsweise kann die zuverlässige Funktion der Vorrichtung 100 auch gewährleistet werden, indem z.B. die Dichtungen 122 und 120 in Form von Lippendichtungen bereitgestellt werden.

Nachfolgend wird mit Bezug auf die Fig. 2A bis 2C die Funktionsweise der Vorrichtung erläutert. Lediglich der Übersichtlichkeit halber, sind in diesen Figuren nicht alle Elemente der Vorrichtung mit Bezugszeichen versehen.

In Fig. 2A ist die in Fig. 1 gezeigte Vorrichtung 100 in einem Zustand gezeigt, in dem sich der Verschlusselement 110 in einer ersten Stellung befindet. In der ersten Stellung verschließt der erste Anschlag 124 die auf der ersten Verschlusselementseite 112 angeordnete Öffnung der Bohrung 150, so dass die Vorrichtung 100 einen Durchfluss des Flüssiggases vom Einlass 104 zum Auslass 106 verhindert. Das heißt, vorzugsweise liegt die auf der ersten Verschlusselementseite 112 um die Öffnung der Bohrung 150 vorgesehene dritte Dichtung 115 gasdicht am zentralen Vorsprung 128 des ersten Anschlags 124 an.

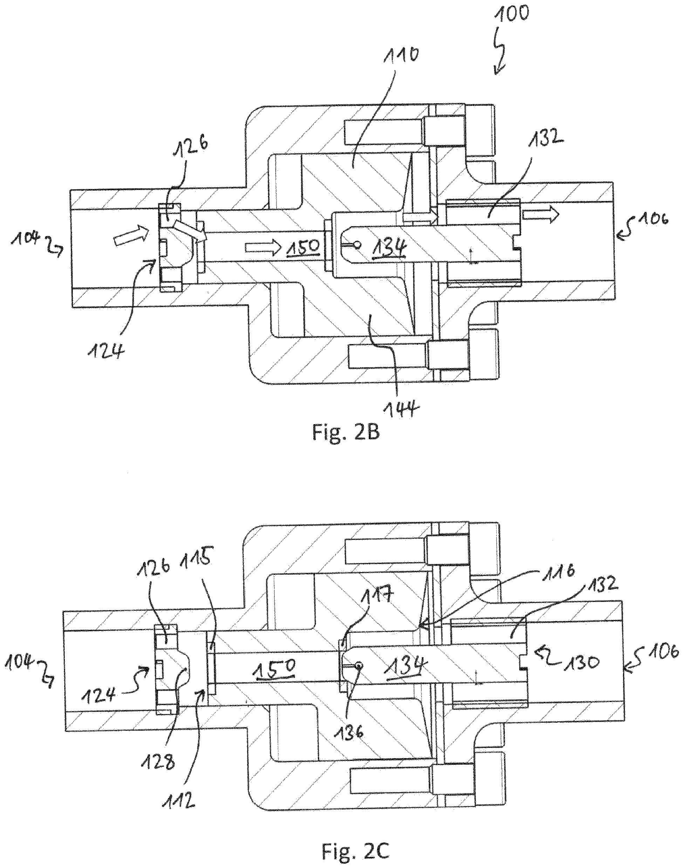

In Fig. 2C ist die in Fig. 1 gezeigte Vorrichtung in einem Zustand gezeigt, in dem sich der Verschlusselement 110 in einer zweiten Stellung befindet. In der zweiten Stellung verschließt der zweite Anschlag 130 die auf der zweiten Verschlusselementseite 116 angeordnete Öffnung der Bohrung 150, so dass die Vorrichtung 100 einen wesentlichen Durchfluss des Flüssiggases vom Einlass 104 zum Auslass 106 verhindert. Das heißt, vorzugsweise liegt die auf der zweiten Verschlusselementseite 116 vorgesehene Dichtung 117 gasdicht am zentralen Vorsprung 134 des zweiten Anschlags 130 an.

In Fig. 2B ist die in Fig. 1 gezeigte Vorrichtung in einem Zustand gezeigt, in dem sich der Verschlusselement 110 in einer dritten Stellung zwischen der ersten und zweiten Stellung befindet. In der dritten Stellung liegen weder die auf der ersten Verschlusselementseite 112 vorgesehene dritte Dichtung 115 am ersten zentralen Vorsprung 128 des ersten Anschlags 124 noch die auf der zweiten Verschlusselementseite 116 vorgesehene Dichtung 117 auf der zweiten Verschlusselementseite am zweiten zentralen Vorsprung 134 des zweiten Anschlags 130 an.

Wenn sich der Verschlusselement 110 wie in Fig. 2B gezeigt in der dritten Stellung befindet, wird ein anhand von Pfeilen gezeigter Durchfluss von Flüssiggas vom Einlass 104 durch die ersten Durchgangsbohrungen 126 des ersten Anschlags, die Bohrung 150 des Verschlusselements 110 und die zweiten Durchgangsbohrungen 132 des zweiten Anschlags 130 zum Auslass 106 ermöglicht. Auf diese Weise haben der erste Anschlag 128 und der zweite Anschlag 130 keinen wesentlichen Einfluss auf die Größe der ersten wirksamen Verschlusselementfläche F1 und der zweiten wirksamen Verschlusselementfläche.

Wenn der Druck des Flüssiggases am Auslass

p2 den Grenzwert $p1 \cdot \frac{F1}{F2}$ übersteigt (idealisierte Betrachtung), wird auf den Koben 110 eine in axialer Richtung zum Auslass 104 gerichtete Kraft ausgeübt, so dass sich der Verschlusselement 110 in die in Fig. 2A gezeigte erste Stellung bewegt. Auf diese Weise verschließt der Verschlusselement 110 die Vorrichtung 100 und der Druck des Flüssiggases kann im am Auslass 104 angeschlossenen Teil des Flüssiggasleitungssystems nicht weiter ansteigen.

Wenn der Druck des Flüssiggases am Auslass 106, beispielsweise aufgrund eines Verbrauchers (z.B. einer Gasheizung), wieder unter den oben genannten Grenzwert sinkt, bewegt sich der Verschlusselement 110 wieder von der ersten Stellung weg in die in Fig. 2C gezeigte dritte Stellung, so dass wieder ein Durchfluss des Flüssiggases vom Einlass 104 zum Auslass 106 zugelassen wird. In der Praxis bewegt sich der Verschlusselement je nach Druck am Einlass 104 und Auslass 106 dynamisch zwischen der ersten Stellung und der dritten Stellung.

Wenn am Auslass 106 beispielsweise aufgrund eines Schlauchabrisses im Flüssiggasleitungssystem ein plötzlicher Druckabfall auftritt, wird die zweite Verschlusselementseite 116 nicht mehr mit Druck oder nur noch mit einem geringen Druck beaufschlagt, so dass auf den Verschlusselement 110 eine in axialer Richtung zum Auslass 106 gerichtete Kraft ausgeübt wird. Der Verschlusselement 110 wird daher in die zweite Stellung bewegt, in der ein wesentlicher Durchfluss des Flüssiggases vom Einlass 104 zum Auslass 106 verhindert wird. Mit anderen Worten funktioniert die Vorrichtung 100 auch als Schlauchabriss- und/oder Schlauchbruchsicherung.

Die Vorrichtung 100 kann jedoch vorzugsweise mittels der Umgehung 136 in der zweiten Stellung des Verschlusselements 110 einen geringfügigen Durchfluss von Flüssiggas vom Einlass 104, durch die ersten Durchgangsöffnungen 126 des ersten Anschlags 124, die Bohrung 150 des Verschlusselements 110, die im zentralen Vorsprung 134 des zweiten Anschlags 130 vorgesehene Umgehung 136 und die zweiten Durchgangsöffnungen 132 des zweiten Anschlags 130 zum Auslass 106 bereitstellen. Auf diese Weise kann der Druck am Auslass 106 wieder aufgebaut werden, wenn die Störung (z.B. der Schlauchabriss) behoben wurde oder wenn sich der Verschlusselement 110 lediglich aufgrund einer Fehlbedienung oder eines sonstigen Fehlers in die zweite Stellung bewegt hat.

Die Vorrichtung 100 kann zudem eine nicht gezeigte Betätigungsvorrichtung aufweisen, mit welcher ein Benutzer den Verschlusselement 110 manuell von der zweiten Stellung in die dritte Stellung bewegen kann.

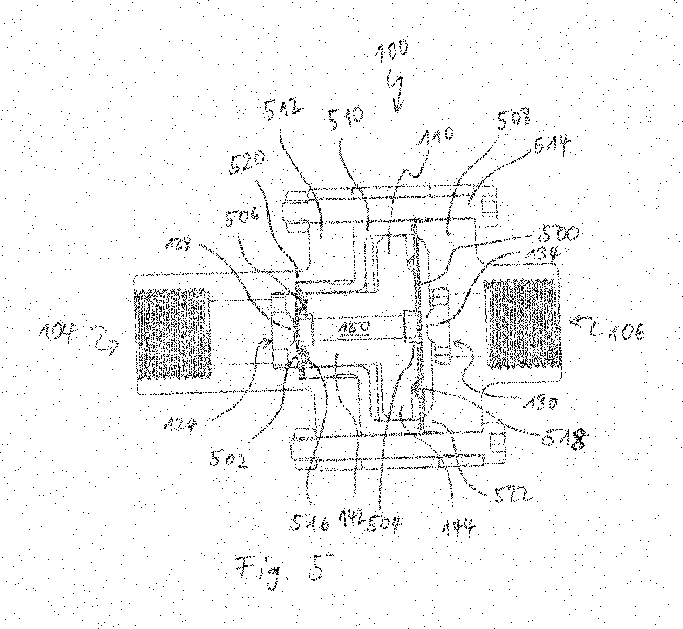

Fig. 5 zeigt ein weiteres Ausführungsbeispiel einer Vorrichtung 100 zur Verhinderung einer Rückverflüssigung eines Flüssiggases in einem Flüssiggasleitungssystem. Die in Figur 5 gezeigt Vorrichtung 100 weist einen ähnlichen Aufbau wie die in den Figuren 1 bis 2C gezeigte Vorrichtung 100 auf. Im Folgenden wird lediglich auf die Unterschiede zu der in den Figuren 1 bis 2C gezeigten Vorrichtung 100 eingegangen. Für die restlichen Strukturen und Funktionen gilt die bezüglich der Figuren 1 bis 2C angegebene Beschreibung.

Die in Fig. 5 gezeigte Vorrichtung 100 weist wie die in den Figuren 1 bis 2C gezeigte Vorrichtung 100 ein im Körperinnenraum angeordnetes doppelseitig wirkendes bewegliches Verschlusselement 110 auf. Das Verschlusselement 110 weist eine erste Membran 502 auf der ersten Verschlusselementseite und eine zweite Membran 500 auf der zweiten Verschlusselementseite auf. Es ist jedoch auch denkbar, dass das Verschlusselement 110 nur auf einer Verschlusselementseite eine Membran aufweist und dass auf der anderen Verschlusselementseite beispielsweise eine Dichtung in Form eines Dichtungsrings oder einer Lippendichtung vorgesehen ist, wie es in den Figuren 1 bis 2C beispielhaft gezeigt ist.

Der Körper der Vorrichtung 100 weist vorzugsweise ein erstes Körperbauteil 512 auf, das zumindest teilweise einen ersten Körperabschnitt 520 bildet. Weiterhin weist der Körper vorzugsweise ein zweites Körperbauteil 508 auf, das zumindest teilweise einen zweiten Körperabschnitt 522 bildet. Der Körper weist vorzugsweise ferner ein drittes Körperbauteil 510 auf. Die Körperbauteile 508, 510 und 512 sind vorzugsweise mittels einer oder mehrerer Bolzen und/oder Schrauben 514 oder durch eine umformende Verbindung (Bördeln) miteinander verbunden und/oder aneinander befestigt.

Der Rand der ersten Membran 502 ist zwischen dem ersten Körperbauteil 512 und dem dritten Körperbauteil 510 eingeklemmt, so dass die erste Membran 502 am ersten Körperabschnitt 520 abdichtend befestigt ist. Der Rand der zweiten Membran 500 ist zwischen dem zweitem Körperbauteil 508 und dem dritten Körperbauteil 510 eingeklemmt, so dass die zweite Membran 500 am zweiten Körperabschnitt 522 gasdicht befestigt ist.

In der Mitte weist die erste Membran 502 eine Öffnung mit einer Auskragung 506 auf, die auf der ersten Verschlusselementseite in die Bohrung 150 des Verschlusselements 110 eingreift. Die zweite Membran 500 weist in der Mitte eine Öffnung mit einer Auskragung 504 auf, die auf der zweiten Verschlusselementseite in die Bohrung 150 des Verschlusselements eingreift. Die Auskragungen 506, 504 können beispielsweise mittels eines Hinterschnittes (nicht gezeigt) und/oder durch Klemmen und/oder durch Kleben in der Bohrung 150 befestigt sein, z.B. gasdicht.

Auf diese Weise bildet die erste Membran 502 eine Dichtung zwischen dem ersten Verschlusselementabschnitt 142 bzw. der ersten Verschlusselementseite und dem ersten Körperabschnitt 520. Entsprechend bildet die zweite Membran 500 eine Dichtung zwischen dem zweiten Verschlusselementabschnitt 144 bzw. der zweiten Verschlusselementseite und dem zweiten Körperabschnitt 522. Auf diese Weise wird das durch den Einlass 104, die Bohrung 150 und den Auslass 106 gebildete Volumen vom restlichen Körperinnenraum, insbesondere vom das Verschlusselement 110 umgebenden Körperinnenraum, abgedichtet.

Die Auskragung 506 auf der ersten Verschlusselementseite bildet eine dritte Dichtung, mittels derer der Vorsprung 128 des ersten Anschlags 124 die Bohrung 150 auf der ersten Verschlusselementseite gasdicht verschließen kann. Die Auskragung 504 auf der zweiten Verschlusselementseite bildet eine vierte Dichtung, mittels derer der Vorsprung 134 des zweiten Anschlags die Bohrung 150 auf der zweiten Verschlusselementseite gasdicht verschließen kann.

Die erste Membran 502 und zweite Membran 500 können jeweils eine oder mehrere Falten und/oder Biegungen 516, 518 enthalten, die die Flexibilität der Membran erhöhen.

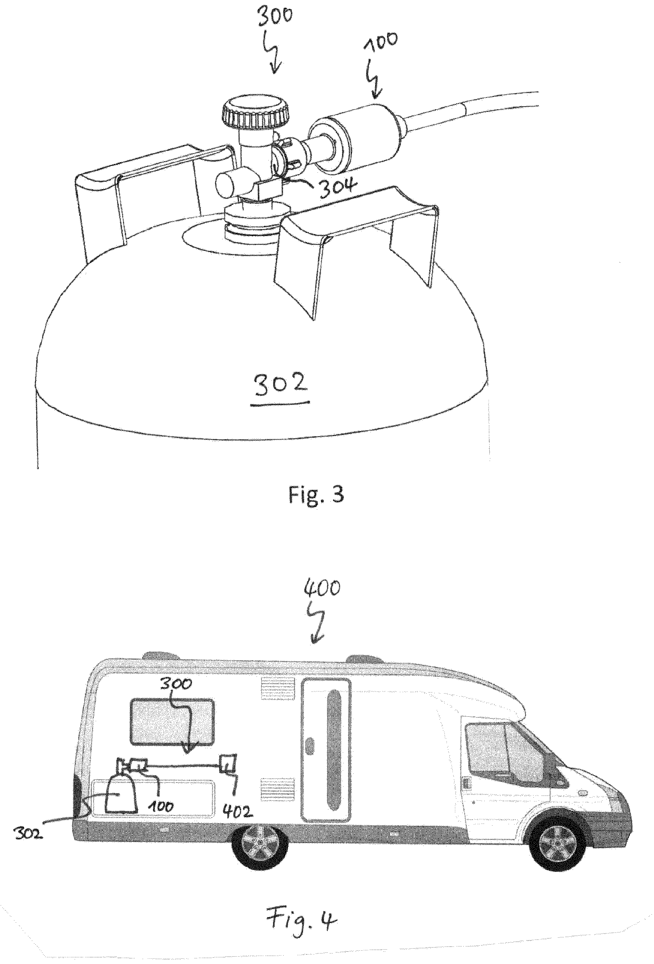

In Fig. 3 ist ein Flüssiggasleitungssystem 300 mit einer als Gasflasche 302 ausgebildeten Flüssiggasquelle und der hierin offenbarten Vorrichtung 100 zur Verhinderung einer Rückverflüssigung des Flüssiggases in dem Flüssiggasleitungssystem 300 gezeigt. In Fig. 3 ist gezeigt, dass die Vorrichtung unmittelbar am Auslass 304 der Gasflasche 302 angeschlossen ist, d.h. ohne Zwischenschaltung eines Schlauches, eines Druckreglers und/oder einer Schlauchbruchsicherung. Das Flüssiggasleitungssystem 300 kann stromabwärts der Vorrichtung 100 weitere Komponenten bzw. Armaturen aufweisen, beispielsweise einen Druckregler, einen Gasfilter, ein Crashventil und einen oder mehrere Verbraucher.

In Fig. 4 ist ein Fahrzeug 400, hier beispielsweise ein Reisemobil, gemäß einem Ausführungsbeispiel der Erfindung gezeigt. Das Fahrzeug weist ein Flüssiggasleitungssystem 300 mit einer Flüssiggasquelle 302, der hierin offenbarten Vorrichtung zur Verhinderung einer Rückverflüssigung des Flüssiggases in dem Flüssiggasleitungssystem 300 sowie weiteren Komponenten, Armaturen und/oder einem oder mehreren Verbrauchern 402 auf.

**Patentansprüche**

1. Vorrichtung (100) zur Verhinderung einer Rückverflüssigung eines Flüssiggases in einem Flüssiggasleitungssystem (300), aufweisend:

   einen Körper (102) mit einem Einlass (104), einem Auslass (106), einem ersten Körperabschnitt (520), einem zweiten Körperabschnitt (522) und einem Körperinnenraum (108);
   ein im Körperinnenraum (108) angeordnetes doppelseitig wirkendes bewegliches Verschlusselement (110) mit einem ersten Verschlusselementabschnitt (142) und einem zweiten Verschlusselementabschnitt (144);
   wobei das Verschlusselement (110) eine erste Dichtung (122, 502) zwischen dem ersten Verschlusselementabschnitt (142) und dem ersten Körperabschnitt (520) und/oder eine zweite Dichtung (120, 500) zwischen dem zweiten Verschlusselementabschnitt (144) und dem zweiten Körperabschnitt (522) aufweist;

wobei das Verschlusselement (110) im Körperinnenraum (108) zwischen einer ersten Stellung und einer zweiten Stellung verschiebbar ist;

wobei das Verschlusselement (110) in seiner ersten Stellung einen Durchfluss des Flüssiggases vom Einlass (104) zum Auslass (106) verhindert;

wobei die Vorrichtung (100) zumindest in einer dritten Stellung des Verschlusselements (110) zwischen der ersten Stellung und der zweiten Stellung einen Durchfluss des Flüssiggases vom Einlass (104) zum Auslass (106) zulässt;

wobei das Verschlusselement (110) eine dem Einlass (104) zugewandte erste Verschlusselementseite (112) mit einer ersten wirksamen Verschlusselementfläche F1 (114) und eine dem Auslass (106) zugewandte zweite Verschlusselementseite (116) mit einer zweiten wirksamen Verschlusselementfläche F2 (118) aufweist;

wobei die zweite wirksame Verschlusselementfläche F2 (118) größer ist als die erste wirksame Verschlusselementfläche F1 (114)

wobei die erste Dichtung (122, 502) eine erste Membran (502) aufweist und/oder die zweite Dichtung (120, 500) eine zweite Membran (500) aufweist.

2.  Vorrichtung nach Anspruch 1,

    wobei die erste Membran (502) und/oder die zweite Membran (500) jeweils ein Elastomer, Acrylnitril-Butadien-Kautschuk und/oder Fluorkautschuk aufweisen/aufweist; und/oder

    wobei die erste Membran (502) und/oder die zweite Membran (500) eine Härte zwischen 55 und 85 IRHD-M aufweisen/aufweist.

3.  Vorrichtung (100) nach Anspruch 1, wobei die Vorrichtung (100) geeignet ist, um mit Flüssiggas zu operieren, das am Einlass (104) mit einem Druck im Bereich zwischen 1 bar und 16 bar, vorzugsweise zwischen 3 bar und 6 bar, bereitgestellt wird.

4.  Vorrichtung (100) nach einem der vorangehenden Ansprüche,

    wobei sich die Größe der ersten wirksamen Verschlusselementfläche F1 in der ersten Stellung des Verschlusselements um 20% oder weniger, vorzugsweise 10% oder weniger, von der Größe der ersten wirksamen Verschlusselementfläche F1 in der zweiten und/oder dritten Stellung des Verschlusselements unterscheidet, wobei die Größe der ersten wirksamen Verschlusselementfläche F1 in der ersten Stellung des Verschlusselements und der dritten Stellung des Verschlusselements weiter bevorzugt gleich ist; und/oder

wobei F2 ≤ 50 * F1, besonders bevorzugt F2 ≤ 20 * F1, wenn das Verschlusselement in der ersten Stellung ist; und/oder

wobei die Vorrichtung (100) derart konfiguriert ist, vorzugsweise die erste wirksame Verschlusselementfläche F1 (114) und die zweite wirksame Verschlusselementfläche F2 (118) derart aufeinander abgestimmt sind, dass das Verschlusselement (110) die erste Stellung einnimmt, wenn der Druck des Flüssiggases am Auslass (106) größer ist als der dritte Teil, bevorzugt der fünfte Teil, besonders bevorzugt der achte Teil, weiter besonders bevorzugt der zehnte Teil des Drucks des Flüssiggases am Einlass (104); und/oder

wobei F2 ≥ 2 * F1 und/oder F2 ≤ 10 * F1, bevorzugt F2 ≥ 2,5 * F1 und/oder F2 ≤ 4 * F1, besonders bevorzugt F2 = 3,33 * F1.

5.  Vorrichtung (100) nach einem der vorangehenden Ansprüche, wobei die Vorrichtung (100) in der zweiten Stellung des Verschlusselements (110) einen wesentlichen Durchfluss des Flüssiggases vom Einlass (104) zum Auslass verhindert (106);

    wobei das Verschlusselement (100) vorzugsweise die zweite Stellung einnimmt, wenn beim Auslass (106) der Vorrichtung (100) ein Druckabfall des Flüssiggases, bevorzugt ein plötzlicher Druckabfall durch einen Schlauchabriss, auftritt.

6.  Vorrichtung nach (100) einem der vorangehenden Ansprüche,

    wobei die Vorrichtung (100) eine Längsachse (103) aufweist;

    wobei der Innenraum (108) des Körpers (102) bezüglich der Längsachse (103) im Wesentlichen rotationssymmetrisch ist;

    wobei das Verschlusselement (110) bezüglich der Längsachse (103) im Wesentlichen rotationssymmetrisch ist;

    wobei der erste Innenraumabschnitt (138) einen ersten Durchmesser (143) und der zweite Innenraumabschnitt (140) einen zweiten Durchmesser (145) aufweist;

    wobei der erste Innenraumabschnitt (138) näher beim Einlass (104) als der zweite Innenraumabschnitt (140) angeordnet ist;

    wobei der zweite Durchmesser (145) größer ist als der erste Durchmesser (143) ist;

    wobei der erste Verschlusselementabschnitt (142) die erste wirksame Verschlusselementfläche (114) und der zweite Verschlusselementabschnitt (144) die zweite wirksame Verschlusselementfläche (118) aufweist;

    wobei der erste Verschlusselementabschnitt

(142) zumindest teilweise im ersten Innenraumabschnitt (138) angeordnet ist; und wobei der zweite Verschlusselementabschnitt (144) zumindest teilweise im zweiten Innenraumabschnitt (140) angeordnet ist.

7. Vorrichtung nach einem der vorangehenden Ansprüche,

    wobei der Körperinnenraum eine zwischen dem ersten Innenraumabschnitt und dem zweiten Innenraumabschnitt angeordnete Innenraumschulterfläche aufweist;

    wobei das Verschlusselement zwischen dem ersten Verschlusselementabschnitt und dem zweiten Verschlusselementabschnitt eine Verschlusselementschulterfläche aufweist;

    wobei ein Volumen zwischen der Innenraumschulterfläche und der Verschlusselementschulterfläche eingeschlossen ist, dessen Größe von der Stellung des Verschlusselements abhängt;

    wobei:

        die Vorrichtung derart eingerichtet ist, dass das zwischen der Innenraumschulterfläche und der Verschlusselementschulterfläche eingeschlossene Volumen mit Umgebungsdruck beaufschlagt ist; und/oder

        der Körper eine Öffnung aufweist, welche das zwischen der Innenraumschulterfläche und der Verschlusselementschulterfläche eingeschlossene Volumen mit der Umgebung verbindet.

8. Vorrichtung (100) nach einem der vorangehenden Ansprüche,

    wobei das Verschlusselement (110) eine von der ersten Verschlusselementseite (112) zur zweiten Verschlusselementseite (116) durchgehende Bohrung (150) aufweist;

    wobei die Vorrichtung (100) in der dritten Stellung des Verschlusselements (110) einen Durchfluss des Flüssiggases vom Einlass (104) durch die Bohrung (150) des Verschlusselements (110) zum Auslass (106) zulässt.

9. Vorrichtung (100) nach einem der vorangehenden Ansprüche,

    wobei der Körperinnenraum (108) einen ersten Anschlag (124) aufweist;

    wobei die erste Verschlusselementseite (112) in der ersten Stellung des Verschlusselements (110) abdichtend am ersten Anschlag (124) anliegt und so den Durchfluss des Flüssiggases vom Einlass (104) zum Auslass (106) verhindert;

    wobei der Körperinnenraum (108) einen zweiten Anschlag (130) aufweist;

    wobei die zweite Verschlusselementseite (116) in der zweiten Stellung des Verschlusselements (110) abdichtend am zweiten Anschlag (130) anliegt und so den wesentlichen Durchfluss des Flüssiggases vom Einlass (104) zum Auslass (106) verhindert;

    wobei, vorzugsweise, der erste Anschlag (124) in der ersten Stellung des Verschlusselements (110) an einer Kante der Bohrung (150) des Verschlusselements (110) auf der ersten Verschlusselementseite (112) anliegt; und/oder

    wobei, vorzugsweise, der zweite Anschlag (130) in der zweiten Stellung des Verschlusselements (110) an einer Kante der Bohrung (150) des Verschlusselements (110) auf der zweiten Verschlusselementseite (116) anliegt.

10. Vorrichtung (100) nach einem der Ansprüche 8 bis 9,

    wobei das Verschlusselement (110) auf der ersten Verschlusselementseite (112) eine dritte Dichtung (115, 506) aufweist, um eine Dichtung zwischen dem ersten Anschlag (124) und der Bohrung (150) herzustellen; und/oder

    wobei das Verschlusselement (110) auf der zweiten Verschlusselementseite (116) eine vierte Dichtung (117, 504) aufweist, um eine Dichtung zwischen dem zweiten Anschlag (124) und der Bohrung (150) herzustellen.

11. Vorrichtung (100) nach Anspruch 10;

    wobei die dritte Dichtung (115, 506) integral mit der ersten Membran (502) ausgebildet ist; und/oder

    wobei die vierte Dichtung (117, 504) integral mit der zweiten Membran (500) ausgebildet ist.

12. Vorrichtung (100) nach einem der Ansprüche 9 bis 11, wobei die Vorrichtung (100) eine Umgehung (136) für den zweiten Anschlag (130) bereitstellt, um in der zweiten Stellung des Verschlusselements (110) einen geringfügigen Durchfluss des Flüssiggases vom Einlass (104) zum Auslass (106) zuzulassen;

    wobei die Umgehung (136) vorzugsweise senkrecht zur Flussrichtung des Gases einen lichten Querschnitt von weniger als 0,7 mm$^2$ oder bevorzugt von weniger als 0,2 mm$^2$ aufweist;

    wobei die Umgehung (136) vorzugsweise durch einen Umgehungskanal im Körper (102) und/oder im Verschlusselement (110) und/oder im zweiten Anschlag (130) und/oder in einer Dichtung (117), die am zweiten Anschlag anliegt, bereitgestellt ist, wobei der Umgehungskanal besonders bevorzugt durch eine Bohrung im zweiten Anschlag (130) bereitgestellt ist.

**13.** Vorrichtung (100) nach einem der vorangehenden Ansprüche, wobei die Vorrichtung (100) eine Betätigungseinrichtung aufweist, um das Verschlusselement (110) manuell aus der zweiten Stellung heraus zu bewegen.

**14.** Flüssiggasleitungssystem (300) aufweisend:

eine Flüssiggasquelle (302), vorzugsweise eine Flüssiggasflasche; und
eine Vorrichtung (100) nach einem der vorangehenden Ansprüche;
wobei die Vorrichtung (100) vorzugsweise unmittelbar am Auslass (304) der Flüssiggasquelle (302) angeschlossen ist.

**15.** Fahrzeug (400), vorzugsweise Caravan oder Reisemobil, aufweisend eine Vorrichtung (100) nach einem der Ansprüche 1 bis 13 oder ein Leitungssystem (300) nach Anspruch 14.

Fig. 1

Fig. 2A

Fig. 2B

Fig. 2C

300

100

304

302

Fig. 3

400

300

100    402

302

Fig. 4

Fig. 5

Europäisches
Patentamt

European
Patent Office

Office européen
des brevets

**EUROPÄISCHER RECHERCHENBERICHT**

**Nummer der Anmeldung**

**EP 22 18 9170**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2006/070116 A2 (CLESSE IND [FR]; BRUHAT PASCAL [FR]) 6. Juli 2006 (2006-07-06) * Figuren 1,2; Ansprüche 1-12; Seite 7, Zeilen 11-21 * ----- | 1-15 | INV. G05D16/10 |
| X | WO 2010/096406 A1 (CAREFUSION 2200 INC [US]; HAN STEVE [US]; STENZLER ALEX [US]) 26. August 2010 (2010-08-26) * Figuren 1-6; Ansprüche 1-20; Absätze 16-29 * ----- | 1-15 | |
| X | DE 24 21 726 A1 (MATTER GMBH KG KURT) 6. November 1975 (1975-11-06) * Figuren 1-6; Ansprüche 1-20; Absätze 16-29 * ----- | 1-15 | |
| A | US 2010/101666 A1 (PECHTOLD RAINER [DE] ET AL) 29. April 2010 (2010-04-29) * Absätze 6,28,30; Figuren 1,2 * ----- | 1-15 | |
| A | US 9 891 635 B1 (ROWE CARROLL G [US]) 13. Februar 2018 (2018-02-13) * Spalte 2, Zeile 52 – Spalte 3, Zeile 9; Figuren 1,2 * ----- | 1-15 | RECHERCHIERTE SACHGEBIETE (IPC) G05D F17C |
| A | WO 2005/124493 A1 (TOYOTA MOTOR CO LTD [JP]; TOYOTA JIDOSHOKKI KK [JP] ET AL.) 29. Dezember 2005 (2005-12-29) * Figuren 1-4 * ----- | 1-15 | |

Der vorliegende Recherchenbericht wurde für alle Patentansprüche erstellt

| Recherchenort | Abschlußdatum der Recherche | Prüfer |
|---|---|---|
| München | 17. Januar 2023 | Garmendia, Ion |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 9170

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2023

| Im Recherchenbericht angeführtes Patentdokument | Datum der Veröffentlichung | Mitglied(er) der Patentfamilie | Datum der Veröffentlichung |
|---|---|---|---|
| WO 2006070116 A2 | 06-07-2006 | FR 2879721 A1 | 23-06-2006 |
| | | WO 2006070116 A2 | 06-07-2006 |
| WO 2010096406 A1 | 26-08-2010 | AU 2010216140 A1 | 06-10-2011 |
| | | BR PI1008686 A2 | 08-03-2016 |
| | | CA 2752737 A1 | 26-08-2010 |
| | | CN 102395934 A | 28-03-2012 |
| | | EP 2399178 A1 | 28-12-2011 |
| | | JP 5476397 B2 | 23-04-2014 |
| | | JP 2012518174 A | 09-08-2012 |
| | | KR 20110122189 A | 09-11-2011 |
| | | RU 2011138268 A | 27-03-2013 |
| | | US 2010206309 A1 | 19-08-2010 |
| | | US 2015177738 A1 | 25-06-2015 |
| | | WO 2010096406 A1 | 26-08-2010 |
| | | ZA 201106657 B | 26-11-2014 |
| DE 2421726 A1 | 06-11-1975 | KEINE | |
| US 2010101666 A1 | 29-04-2010 | CN 101725827 A | 09-06-2010 |
| | | DE 102009050647 A1 | 15-07-2010 |
| | | US 2010101666 A1 | 29-04-2010 |
| | | US 2015268672 A1 | 24-09-2015 |
| US 9891635 B1 | 13-02-2018 | KEINE | |
| WO 2005124493 A1 | 29-12-2005 | JP 2006003943 A | 05-01-2006 |
| | | WO 2005124493 A1 | 29-12-2005 |

EPO FORM P0461

Für nähere Einzelheiten zu diesem Anhang : siehe Amtsblatt des Europäischen Patentamts, Nr.12/82